# EUROPÄISCHE PATENTSCHRIFT

(11) **EP 3 560 297 B1**
(45) Veröffentlichungstag und Bekanntmachung des Hinweises auf die Patenterteilung: **23.08.2023**
(21) Anmeldenummer: 17825233.4
(22) Anmeldetag: 22.12.2017
(51) Int. Cl.: H05B 47/19

(54) **INSTALLIEREN ODER ÄNDERN EINES ABLAUFFÄHIGEN RECHNERPROGRAMMS IN EINEM BELEUCHTUNGSSYSTEM**
INSTALLING OR CHANGING AN EXECUTABLE COMPUTER PROGRAM IN AN ILLUMINATION SYSTEM
INSTALLATION OU MODIFICATION D'UN PROGRAMME INFORMATIQUE EXÉCUTABLE DANS UN SYSTÈME D'ÉCLAIRAGE

(30) Priorität: 23.12.2016 DE 102016125631
(43) Veröffentlichungstag der Anmeldung: 30.10.2019
(73) Patentinhaber: OSRAM GmbH, 80807 München (DE)
(72) Erfinder: FEIL, Henry, 82008 Unterhaching (DE); PEITZ, Christoph, 59556 Lippstadt (DE); STUTZ, Michel, 81541 München (DE); WALLWITZ, Karl-Heinz, 13355 Berlin (DE); WALLWITZ, Andrej, 80689 München (DE)
(74) Vertreter: Scheele Jaeger Wetzel Patentanwälte
(86) Internationale Anmeldenummer: PCT/EP2017/084352
(87) Internationale Veröffentlichungsnummer: WO 2018/115425

(56) Entgegenhaltungen:
- US-A1- 2015 369 618
- US-A1- 2016 242 264

## Beschreibung

Die Erfindung betrifft ein Verfahren zum Installieren oder Ändern eines ablauffähigen Rechnerprogramms in einem Beleuchtungssystem gemäß Anspruch 1 sowie ein Beleuchtungssystem nach Anspruch 18.

Beleuchtungssysteme, Beleuchtungseinrichtungen sowie auch Leuchteinrichtungen und Sendeeinrichtungen der gattungsgemäßen Art sind dem Grunde nach im Stand der Technik umfänglich bekannt, sodass es eines gesonderten druckschriftlichen Nachweises hierfür nicht bedarf. Mit Beleuchtungssystemen werden Räume, beispielsweise außerhalb oder auch innerhalb von Gebäuden, in vorgebbarer Weise ausgeleuchtet, um eine bestimmungsgemäße Nutzung zu ermöglichen oder zu unterstützen. Für die Beleuchtungssysteme werden zunehmend Beleuchtungseinrichtungen eingesetzt, die neben einer Leuchteinrichtung, die in vorgebbarer Weise Licht abgibt, auch eine Sendeeinrichtung aufweisen, die zumindest dazu ausgebildet ist, eine spezifische Identifikationsinformation drahtlos auszusenden, beispielsweise nach Art von Rundfunk. Vorzugsweise ist diese Sendeeinrichtung dazu ausgebildet, das Signal nach Art von Nahfunk auszusenden. Eine derartige Sendeeinrichtung wird im Stand der Technik auch als "Beacon" bezeichnet.

Sogenannte Beacons können mit Leuchteinrichtungen kombiniert werden, um leuchtenspezifische oder auch andere Informationen mittels ihres Signals bereitzustellen. Die Beacon-Technologie basiert auf einem Sendersystem beziehungsweise auch einem Sender-Empfänger-System. Ein Beacon (zu Deutsch auch Leuchtfeuer, Bake oder Peilsender) ist ein kleiner, meist batteriebetriebener Sender, der ein Signal in, vorzugsweise definierbaren, Zeitintervallen aussendet, beispielsweise basierend auf einem Bluetooth-Low-Energy-Standard (BLE). Das Signal eines Beacon zeichnet sich durch die Identifikationsinformation aus, die beispielsweise eine einmalige Identifikationsnummer, englisch zum Beispiel universally unic identifier (UUID) genannt, umfasst. Beacons können dazu verwendet werden, Objekten und/oder Orten eine, insbesondere digitale, Identifikation zuzuordnen. Objekten, an denen ein Beacon installiert ist, sowie auch Orte, an denen ein Beacon, zum Beispiel an einer Wand oder einer Decke, installiert ist, können auf diese Weise von Kommunikationsendgeräten, beispielsweise Smartphones, Laptops und/oder dergleichen, im Signalfeld des Beacon identifiziert werden.

Mit Hilfe eines Beacon kann dadurch zum Beispiel ein Ort identifiziert werden beziehungsweise eine Ortung durchgeführt werden. Durch Anordnung von einem oder mehreren Beacons in einem vorgegebenen Bereich, beispielsweise einem Gebäudebereich oder dergleichen, kann eine Art funkbasiertes Raster bereitgestellt werden, dass es einem sich in dem Bereich befindlichen Kommunikationsendgerät mittels seiner Funkschnittstelle, insbesondere BLE-Schnittstelle, sowie entsprechenden Auswertemöglichkeiten erlaubt, die eigene Position zu ermitteln. Die individuellen Identifikationsnummern der installierten Beacons geben einem Ort dabei eine Kennung, anhand der das Kommunikationsendgerät, zumindest näherungsweise, die Position bestimmen kann. Grundsätzlich kann jedenfalls ein Sendebereich eines jeweiligen Beacon ermittelt werden. Durch geeignete Auswertung, beispielsweise unter Nutzung vorgegebener Algorithmen oder dergleichen, kann die Genauigkeit der ermittelten Position, beispielsweise unter Auswerten einer Signalstärke und/oder dergleichen, verbessert werden. Vorzugsweise kann das Kommunikationsendgerät hierfür auf Daten eines Datenspeichers zugreifen, zum Beispiel über ein Kommunikationsnetzwerk wie dem Internet und/oder dergleichen. Der Datenspeicher kann beispielsweise ein Cloud-Server oder dergleichen sein. Hier können zum Beispiel die Identifikationsnummer und eine zugeordnete Position in einer Karte vermerkt sein.

Kommt das Kommunikationsendgerät in die Reichweite der Sendeeinrichtung beziehungsweise des Beacon, kann es anhand der ermittelten Identifikationsnummer somit beispielsweise über eine Serverabfrage den eigenen Standort ermitteln. Unter Nutzung weiterer Signale von weiteren Sendeeinrichtungen beziehungsweise Beacons kann mittels Ortungsalgorithmen die Genauigkeit verbessert werden, insbesondere kann aus einer Empfangsfeldstärke des jeweiligen Signals der Sendeeinrichtung beziehungsweise des Beacon ein Abstand ermittelt werden.

Grundsätzlich können in der Lichttechnik bei Beleuchtungssystemen der gattungsgemäßen Art Sendeeinrichtungen beziehungsweise Beacons installiert werden. Dabei wird insbesondere der Vorteil genutzt, dass eine Lichtinstallation einen permanenten Energiezugang bereitstellt, um die Sendeeinrichtung beziehungsweise den Beacon mit elektrischer Energie zu versorgen. Daraus ergibt sich ein Vorteil, nämlich dass die Sendeeinrichtung beziehungsweise der Beacon keine eigene Energieversorgung in Form einer Batterie benötigt und somit entsprechender Wartungsaufwand eingespart werden kann. Darüber hinaus erlaubt es diese Ausgestaltung, dass auch Einstellungen der Sendeeinrichtung beziehungsweise des Beacon gewählt werden können, die einen hohen Energieverbrauch zur Folge haben, ohne dass dies Auswirkungen auf eine Lebensdauer des Beacon zu haben braucht. Darüber hinaus können Installationsprozesse von derartigen Sendeeinrichtungen beziehungsweise Beacons und der Lichttechnik vereinheitlicht werden. Ein weiterer Vorteil ist eine definierte Arretierungsposition der Sendeeinrichtung beziehungsweise des Beacon, die vorzugsweise derart gewählt ist, dass die Sendeeinrichtung beziehungsweise der Beacon vor Manipulation geschützt ist. Dadurch kann einem Ort somit eine zuverlässig sichere Kennung zugeordnet werden.

Ein Überblick über Nutzungspotenziale der Integration einer Sendeeinrichtung beziehungsweise eines Beacon in eine Beleuchtungseinrichtung kann folgender Aufzählung entnommen werden:
- Es kann die Energieversorgung der Lichtinstallation anstelle einer Energieversorgung durch eine Batterie genutzt werden, um zum Beispiel Lebenszykluskosten der Sendeeinrichtung beziehungsweise des Beacon zu reduzieren.
- Die elektrische Energieversorgung des Beleuchtungssystems kann genutzt werden, um Sendeparameter des Signals der Sendeeinrichtung beziehungsweise des Beacon an einen Dienst und nicht an eine verfügbare Restenergiemenge beziehungsweise Parameter der Batterie anzupassen. Beispielsweise erzeugen häufige Sendezyklen eine hohe Genauigkeit eines jeweiligen Dienstes, jedoch führt dies jedoch auch zu einem erhöhten Energieverbrauch.
- Der Austausch der Batterie konventioneller Sendeeinrichtungen beziehungsweise Beacons birgt Risiken, nämlich beispielsweise im Hinblick auf Fehler bei der Handhabung.
- Eine Nicht-Verfügbarkeit von Diensten kann durch eine unterbrechungsfreie Energieversorgung der Sendeeinrichtung beziehungsweise des Beacon vermieden werden.
- Ein Installationsort unterhalb einer Decke ist vorteilhaft für eine Signalausbreitung des Signals der Sendeeinrichtung beziehungsweise des Beacon.
- Ein Installationsort unterhalb der Decke kann das Gesamtsystem robuster gegen Störungen beziehungsweise Abschattungen durch andere Objekte auf Höhe einer Flurebene im Gegensatz zu einer Installation der Sendeeinrichtung beziehungsweise des Beacon selbst auf Höhe der Flurebene machen.
- Die Sendeeinrichtung beziehungsweise der Beacon kann vor Manipulationen beziehungsweise Fremdzugriffen, ob versehentlich oder mutwillig, geschützt werden.
- Ein Beleuchtungssystem sowie auch Dienste wie zum Beispiel Ortungsdienste oder dergleichen können als Gesamtsystem "aus einer Hand" angeboten werden.
- Es besteht darüber hinaus die Möglichkeit zur Nutzung eines sicheren Kommunikationsnetzwerkes des Beleuchtungssystems, um beispielsweise die Sendeeinrichtung beziehungsweise den Beacon zu konfigurieren oder die Sendeeinrichtungen beziehungsweise die Beacons untereinander zu vernetzen.
- Eine Vereinheitlichung von Installationsprozessen von Sendeeinrichtungen beziehungsweise Beacons und dem Beleuchtungssystem kann ermöglicht werden.
- Weiterhin besteht die Möglichkeit zur Kopplung zu weiteren Systemelementen einer peripheren Gebäudeinfrastruktur über das Kommunikationsnetzwerk des Beleuchtungssystems, zum Beispiel zu Elementen der Sicherheitstechnik oder dergleichen.
- Es kann ein optisch ansprechendes Beleuchtungssystem bereitgestellt werden, da die Sendeeinrichtung beziehungsweise der Beacon nicht sichtbar in der jeweiligen Beleuchtungseinrichtung beziehungsweise im Beleuchtungssystem angeordnet sein kann.

Ein Beacon kann als Sendeeinrichtung in eine Beleuchtungseinrichtung eines Beleuchtungssystems integriert sein. Das Beleuchtungssystem kann eine Mehrzahl von Beleuchtungseinrichtungen umfassen. Die Beleuchtungseinrichtung umfasst neben dem Beacon die Leuchteinrichtung, die mittels einem oder mehrerer Leuchtmittel die gewünschte Beleuchtungsfunktion bereitstellt. Der Beacon und die Leuchteinrichtung stehen in Kommunikationsverbindung miteinander. Der Beacon ist vorzugsweise in die Leuchteinrichtung integriert angeordnet. Es braucht also für den Beacon kein separates Gehäuse vorgesehen zu werden. Dadurch kann der Beacon zugleich geschützt angeordnet werden, so dass die bestimmungsgemäße Funktion mit hoher Zuverlässigkeit bereitgestellt werden kann. Weitere Beleuchtungseinrichtungen des Beleuchtungssystems sind vorzugsweise identisch zur Beleuchtungseinrichtung ausgebildet.

Der Beacon ist ausgebildet, ein Signal mit einer für den Beacon spezifischen Identifikationsinformation drahtlos auszusenden. Vorzugsweise erfolgt die Aussendung per Funk unter Nutzung eines BLE-Standards. Der Beacon umfasst vorzugsweise ferner eine Steuereinheit, die eine Rechnereinheit sowie eine Speichereinheit umfasst. In der Speichereinheit ist ein ablauffähiges Rechnerprogramm gespeichert, welches für die Rechnereinheit bereitsteht, so dass mittels der Rechnereinheit eine vorgegebene Steuerfunktion erreicht werden kann.

Der Beacon kann ferner über eine Kommunikationsverbindung an weitere lokale Beacons angeschlossen sein. Die Kommunikationsverbindung ist vorliegend ebenfalls als drahtlose Kommunikationsverbindung nach dem BLE-Standard ausgebildet. Die Kommunikationsverbindung zwischen dem Beacon und den weiteren Beacons ist vorzugsweise bidirektional.

Darüber hinaus kann der Beacon über eine weitere Kommunikationsverbindung an eine Dateninfrastruktureinrichtung angeschlossen sein. Die Dateninfrastruktureinrichtung kann der Steuerung des Beleuchtungssystems, hier insbesondere der Beleuchtungseinrichtungen, dienen. Die Infrastruktureinrichtung kann zum Beispiel das Internet oder aber auch ein zentraler Dienste-Server sein. Die Dateninfrastruktureinrichtung kann ferner zur Steuerung und/oder Übermittlung von Daten dienen. Der lokale Beacon der Beleuchtungseinrichtung kann als reine Sendeeinrichtung nach Art eines Rundfunkbetriebs oder auch als kombinierte Sende-Empfangs-Einrichtung ausgebildet sein.

Das Signal des Beacon kann mittels Kommunikationsendgeräten wie zum Beispiel ein Smartphone, ein LAPTOP und/oder dergleichen empfangen werden.

Gemäß einem Nutzungsbeispiel können Menschen beziehungsweise Geräte gegebenenfalls die Herausforderung haben, sich innerhalb eines Bereichs orientieren zu müssen, zu navigieren oder andere lokale digitale Dienste aufzufinden beziehungsweise zu nutzen, wie zum Beispiel Apps, App-Funktionen, Google-Maps, Lightify, Lichtsteuerung und/oder dergleichen. Das Beleuchtungssystem mit integrierten Beacons in einem vorgegebenen Bereich kann für diese Nutzungspotenziale zu einem Ortungs- beziehungsweise Orientierungssystem werden. Mit einer damit realisierbaren Selbstortung des Kommunikationsendgerätes können nun Dienste bereitgestellt werden, beispielsweise eine Navigation, eine Bereitstellung von ortsspezifischen Informationen und/oder dergleichen.

Ein Aspekt der Beacon-Technologie ist die Möglichkeit zur Konfiguration typischer Parameter, wie beispielsweise eine Signalstärke, ein Sendeintervall und/oder dergleichen des Beacon. Mit unterschiedlichen Konfigurationen können verschiedene Anwendungsszenarien individuell unterstützt werden. Wenn zum Beispiel eine hohe Servicequalität in Bezug auf eine genaue Lokalisierung in kurzen Abständen gewünscht ist, beispielsweise bei einer Indoor-Navigation, können zum Beispiel sehr kurze Sendeintervalle zu konfigurieren sein.

Insbesondere bei digital gesteuerten Beleuchtungssystemen, zum Beispiel unter Nutzung von Digital Addressable Lighting Interfaces (DALI), sollte eindeutig identifiziert werden können, welches Leuchtmittel beziehungsweise welche Leuchteinrichtung an welchem Ort angeordnet ist, um mittels digitaler Lichtsteuerung eine exakte Ansteuerung der Leuchteinrichtungen beziehungsweise deren Leuchtmittel in einem bestimmten Bereich zu ermöglichen. Die Leuchteinrichtungen benötigen hierzu eine eindeutige Adresse, welche ihre Position in einem vorgegebenen Bereich wiederspiegelt. Der Fachmann nennt eine derartige Zuordnung von Leuchteinrichtungen zu entsprechenden Positionen beziehungsweise Adressen "kommissionieren". Hierbei müssen mehrere Informationen zusammengeführt werden, nämlich eine eindeutige Identifikationsinformation einer jeweiligen Leuchteinrichtung, ein Installationsort der jeweiligen Leuchteinrichtung in einem vorgegebenen Bereich, das heißt, eine physikalische Adresse der Leuchteinrichtung, sowie eine Kennung der Leuchteinrichtung, das heißt, zum Beispiel ihre digitale Adresse.

Die digitale Adresse einer Leuchteinrichtung kann in der Regel über Powerline-Kommunikation oder eine ähnliche leistungsbasierte Kommunikationslösung über die Energieverteilung an eine Steuerung beziehungsweise Datenverarbeitung übermittelt werden. Die Leuchteinrichtung beziehungsweise ein Vorschaltgerät der Leuchteinrichtung meldet sich somit mit ihrer digitalen Adresse bei der Steuerung an. Damit ist jedoch noch nicht die Information verfügbar, an welcher physikalischen Stelle im vorgegebenen Bereich die Leuchteinrichtung tatsächlich angeordnet ist. Diese Information ist aber erforderlich, wenn nur ein definierter Bereich beleuchtet werden soll, beispielsweise nur ein Besprechungsraum oder ein Teil davon oder dergleichen.

Derzeit können Beleuchtungssysteme beziehungsweise Leuchtmittel und gleichzeitig deren Standort in der Regel nicht ohne weiteres elektronisch identifiziert werden. Typischerweise kann nur über einen Aufkleber oder eine Aufprägung erkannt werden, beispielsweise auf einem Gehäuse der Leuchteinrichtung, um was für einen Typ der Leuchteinrichtung beziehungsweise des Leuchtmittels es sich handelt. Eine andere aufwendige Möglichkeit ist es, jede digital angemeldete Leuchteinrichtung im Rahmen des Beleuchtungssystems einzeln blinken zu lassen und manuell eine Positionsinformation in einem Layout zu markieren.

So ist in der US 2016/0242264 A1 eine intelligente Leuchtensteuerung offenbart. Darüber hinaus offenbart die US 2015/0369618 A1 interaktive Anwendungen, die Daten von Lichtsensornetzwerken nutzen.

Um Leuchteinrichtungen und/oder Leuchtmittel im Rahmen des Beleuchtungssystems effizient mit einem Lichtmanagementsystem (LMS) zu verbinden, wäre es vorteilhaft, eine oder mehrere elektronische beziehungsweise digitale Identifikationsnummern zur Erkennung des Gesamtsystems oder einzelner Komponenten des Gesamtsystems zur Verfügung zu haben.

Eine spezifische Problematik besteht ferner darin, dass in der Regel in einem Installationsplan Positionen der Leuchteinrichtungen beziehungsweise Leuchtmittel für einen Beleuchtungsbereich beziehungsweise ein Service-Bereich festgelegt werden. Dies gibt einem Installateur vor, welche der angelieferten beziehungsweise kommissionierten Leuchteinrichtungen, zum Beispiel bezüglich eines Leuchtentyps oder dergleichen, an welcher Position des Bereichs, beispielsweise des Gebäudes, entsprechend dem Installationsplan angeordnet werden sollen.

Ortsbezogene Dienste beziehungsweise Services, wie zum Beispiel Navigation eines Nutzers oder dergleichen, mittels Beacon sollen dem Nutzer in einem vorgegebenen Bereich vorzugsweise permanent und ohne Einschränkung zur Verfügung stehen. Dies erfordert neben einer unterbrechungsfreien elektrischen Energieversorgung auch eine regelmäßige Wartung beziehungsweise gegebenenfalls auch Aktualisierung von Rechnerprogrammen wie zum Beispiel der Firmware oder dergleichen. Insbesondere Firmware-Updates von technischen Systemen sind von hoher Bedeutung. Sie dienen in der Regel einer Fehlerbeseitigung, einer Leistungsoptimierung sowie gegebenenfalls auch einer Funktionserweiterung des technischen Systems. So können zum Beispiel Fehler, sogenannte Bugs, behoben werden, wodurch die Zuverlässigkeit gesteigert werden kann. Darüber hinaus können Sicherheitslücken geschlossen oder technische Funktionen des Systems nachträglich frei- oder abgeschaltet werden. Somit erklärt sich ein hoher Bedarf, Firmware-Updates in regelmäßigen, insbesondere situationsspezifischen, Abständen durchzuführen.

Derzeit erfordern Firmware-Aktualisierungen bei Sendeeinrichtungen beziehungsweise Beacons allerdings einen hohen Aufwand für einen jeweiligen Service-Anbieter beziehungsweise Betreiber des technischen Systems und damit hohe Lebenszykluskosten.

So ist es beispielsweise erforderlich, für ein Firmware-Update individuell zu jeder entsprechend zu bearbeitenden Sendeeinrichtung beziehungsweise jedem Beacon eine Kommunikationsverbindung manuell herzustellen, um die Daten für die Installation beziehungsweise das Ändern des jeweiligen Rechnerprogramms übertragen zu können. Dies kann dazu führen, dass notwendige Firmware-Updates ressourcenbedingt, beispielsweise aufgrund von personellen Kapazitäten oder Kosten, nicht durchgeführt werden und somit einerseits die jeweiligen Dienste, insbesondere ortsbezogene Dienste, nicht mit der gewünschten Zuverlässigkeit zur Verfügung stehen und andererseits potenzielle Sicherheitslücken nicht geschlossen werden. Beides wirkt einer weiteren Marktdurchdringung wesentlich entgegen, weil eine Akzeptanz der Nutzer beziehungsweise Anwender dadurch leidet.

Es ist deshalb gewünscht, eine aufwendige Verteilung von Firmware-Updates an den Sendeeinrichtungen beziehungsweise Beacons sowie auch einen Prozess der Firmware-Aktualisierung für den jeweiligen Service-Anbieter oder den Betreiber so einfach und zeiteffizient wie möglich zu gestalten.

Es ist deshalb die Aufgabe der Erfindung, ein Installieren oder Ändern eines ablauffähigen Rechnerprogramms in einem Beleuchtungssystem mit einer Mehrzahl von mittels einer jeweiligen Rechnereinheit gesteuerten Beleuchtungseinrichtungen zu verbessern.

Als Lösung werden mit der Erfindung ein Verfahren sowie ein Beleuchtungssystem gemäß den unabhängigen Ansprüchen vorgeschlagen.

Weitere vorteilhafte Ausgestaltungen ergeben sich anhand von Merkmalen der abhängigen Ansprüche.

In Bezug auf ein gattungsgemäßes Beleuchtungssystem wird insbesondere vorgeschlagen, dass zwischen den Beleuchtungseinrichtungen eine Kommunikationsverbindung besteht, wenigstens eine erste der Beleuchtungseinrichtungen ausgebildet ist, die Daten von der Datenquelle zu erhalten und zum Installieren oder Ändern des Rechnerprogramms bei wenigstens einer zweiten der Beleuchtungseinrichtungen die erste der Beleuchtungseinrichtungen ausgebildet ist, die Daten über die Kommunikationsverbindung an die wenigstens eine zweite der Beleuchtungseinrichtungen zu übermitteln.

Die Erfindung erlaubt es, die Daten, die für die Installation beziehungsweise das Ändern des Rechnerprogramms erforderlich sind, lediglich für eine der Beleuchtungseinrichtungen, vorzugsweise eine der Sendeeinrichtungen, bereitzustellen. Über die Kommunikationsverbindung zu den weiteren Beleuchtungseinrichtungen können dann die Daten an die weiteren Beleuchtungseinrichtungen übermittelt werden, ohne dass es dazu einer separaten eigenen unmittelbaren Kommunikationsverbindung zur Datenquelle bedürfte. Im Idealfall braucht also die Datenquelle lediglich mit einer einzigen, nämlich der ersten der Beleuchtungseinrichtungen kommunikationstechnisch verbunden zu sein, um die Daten zu erhalten. Die Daten können dann innerhalb des Beleuchtungssystems nahezu beliebig verteilt werden, und zwar unter Nutzung der Kommunikationsverbindung zwischen den Beleuchtungseinrichtungen.

Dadurch kann natürlich auch das Beleuchtungssystem mit der Vielzahl von Beleuchtungseinrichtungen auf einfache Weise hinsichtlich von Firmware-Updates behandelt werden. Der Aufwand für Firmware-Updates kann dadurch erheblich reduziert werden. Natürlich kann auch vorgesehen sein, dass die Datenquelle mit zwei oder mehr der Beleuchtungseinrichtungen verbunden wird, um die Daten zu übertragen. Dadurch kann eine Datenübertragungsrate erhöht werden. Besonders vorteilhaft erweist es sich, wenn zwei oder mehrere der Beleuchtungseinrichtungen als erste Beleuchtungseinrichtungen mit den Daten beaufschlagt werden und zum Verteilen der Daten an die weiteren, zweiten Beleuchtungseinrichtungen genutzt werden können. Dadurch kann bei Beleuchtungssystemen mit einer großen Anzahl von Beleuchtungseinrichtungen eine zügige Installation beziehungsweise ein zügiges Ändern der jeweiligen Rechnerprogramme erreicht werden. Auf diese Weise kann - vorzugsweise gesteuert über einen zentralen Zugriff - ein Aktualisierungsprozess flexibel und ohne großen manuellen Aufwand durchgeführt werden, beispielsweise zu einem Zeitpunkt, an welchem durch die Sendeeinrichtungen beziehungsweise Beacons bereitgestellte Dienste nicht benötigt werden. Insgesamt kann dadurch eine hohe Verfügbarkeit des Beleuchtungssystems erreicht werden.

Jede der Beleuchtungseinrichtungen umfasst eine Leuchteinrichtung sowie eine ihr zugeordnete Sendeeinrichtung, die in oder unmittelbar an der Leuchteinrichtung angeordnet ist. Dadurch ist die Sendeeinrichtung der Leuchteinrichtung räumlich zugeordnet und bildet zusammen mit der Leuchteinrichtung sowie gegebenenfalls weiteren Einheiten die Beleuchtungseinrichtung. Die Beleuchtungseinrichtung kann somit eine Beleuchtungsfunktion mittels der Leuchteinrichtung bereitstellen, die hierfür ein oder mehrere Leuchtmittel umfasst. Zugleich wird durch die Sendeeinrichtung eine zusätzliche Funktionalität bereitgestellt, indem nämlich die Sendeeinrichtung das Signal mit der für die Sendeeinrichtung spezifischen Identifikationsinformation drahtlos aussendet. Die Identifikationsinformation ist vorzugsweise in Form von Daten in dem Signal der Sendeeinrichtung enthalten. Die Daten können digitale oder auch analoge Daten enthalten. Vorzugsweise ist die Identifikationsinformation ein der jeweiligen Sendeeinrichtung eindeutig zugeordnetes Codesignal. Dadurch wird jede der Beleuchtungseinrichtungen identifizierbar, indem nämlich das jeweils durch die Sendeeinrichtung ausgesendete Signal empfangen und die darin enthaltene spezifische Identifikationsinformation ermittelt wird.

Die Beleuchtungseinrichtungen des Beleuchtungssystems sind gemäß einem ersten Aspekt mittels der jeweiligen Rechnereinheiten gesteuert. Dies erlaubt es, für die Beleuchtungseinrichtungen eine Vielzahl von Funktionalitäten bereitzustellen, die auf einfache Weise realisierbar und/oder anpassbar sein können. Die Beleuchtungseinrichtungen brauchen gemäß einem zweiten Aspekt jedoch nicht zwingend von den jeweiligen Rechnereinheiten gesteuert zu sein. Des Weiteren kann auch vorgesehen sein, dass die Rechnereinheiten der Funktion der Sendeeinrichtung beziehungsweise des Beacon dienen. Natürlich können auch Kombinationen hiervon vorgesehen sein. Ferner kann vorgesehen sein, dass lediglich ein Teil der Beleuchtungseinrichtungen und/oder der Sendeeinrichtungen beziehungsweise Beacon mittels der Rechnereinheiten gesteuert werden.

Weiterhin können die jeweilige Leuchteinrichtung und die jeweils zugeordnete der Sendeeinrichtungen beziehungsweise Beacon in Kommunikationsverbindung stehen, beispielsweise über einen geeigneten BUS oder dergleichen. Die Kommunikationsverbindung kann leitungsgebunden oder auch drahtlos sein. Dem Grunde nach kann dies auch für eine Kommunikation der Rechnereinheiten vorgesehen sein. Diese können mit den jeweils zugeordneten der Sendeeinrichtungen beziehungsweise Beacon einerseits und/oder den zugeordneten Leuchteinrichtungen andrerseits über einen geeigneten BUS kommunizieren. Der BUS ist vorzugsweise ein Intra Luminaire Bus (ILB).

Im Rahmen der Erfindung wird somit ein Gesamtsystem als Beleuchtungssystem sowie ein daran angekoppeltes Verfahren, insbesondere zur Aktualisierung einer Firmware einer Sendeeinrichtung vorgeschlagen, die in beziehungsweise an oder als Teil der Beleuchtungseinrichtung angeordnet ist. Die Kommunikationsverbindung zwischen den Beleuchtungseinrichtungen kann zum Beispiel nach Art eines Netzwerkes, insbesondere als Mesh-Netzwerk, ausgebildet sein. Insbesondere kann vorgesehen sein, dass die Sendeeinrichtungen beziehungsweise Beacon der Beleuchtungseinrichtungen untereinander kommunizieren können. Besonders vorteilhaft erweist es sich, wenn dadurch auch die Beleuchtungseinrichtungen und/oder die Rechnereinheiten untereinander kommunizieren können. Die Kommunikation kann zum Beispiel auf Funk, insbesondere auf Nahfunk, basieren und ein geeignetes Funkprotokoll nutzen. Ein Funkprotokoll kann beispielsweise Bluetooth, ZigBee oder dergleichen sein. Die Sendeeinrichtung kann in einem vorgegebenen Service-Bereich auch als Netzwerkknoten fungieren und über die Beleuchtungseinrichtung beziehungsweise Leuchteinrichtung beziehungsweise Leuchtmittel mit elektrischer Energie versorgt werden. Es braucht also kein aufwendiger Energiewandler vorgesehen zu werden, insbesondere wenn ein elektrischer Anschluss der Sendeeinrichtung parallel zu Leuchtdiodenmodulen als Leuchtmittel der Leuchteinrichtung vorgesehen ist. Die Leuchtdiodenmodule können auch durch Gruppen von Leuchtdioden unter Umständen zu einem Leuchtdioden-Trägermodul zusammengefasst sein.

Es kann ferner vorgesehen sein, dass wenigstens eine spezifisch vorgegebene Sendeeinrichtung beziehungsweise ein spezifisch vorgegebener Beacon eine Relaisfunktion bereitstellt, um eine Kommunikation zwischen Sendeeinrichtungen beziehungsweise Beacon zu ermöglichen, die zueinander nicht in Kommunikationsreichweite angeordnet sind. Die spezifisch vorgegebene Sendeeinrichtung beziehungsweise der spezifisch vorgegebene Beacon kann vorzugsweise räumlich zwischen den Sendeeinrichtungen beziehungsweise Beacon angeordnet sein, zwischen denen die Kommunikation erreicht werden soll. Dadurch kann auch eine Kommunikationsdistanz überbrückt werden, die die Kommunikationsreichweite zwischen benachbart angeordneten Sendeeinrichtungen beziehungsweise Beacon übersteigt. Natürlich kann die Kommunikationsdistanz auch mittels mehrerer spezifisch vorgegebener Sendeeinrichtungen beziehungsweise spezifisch vorgegebener Beacon überbrückt werden.

Vorzugsweise handelt es sich bei der Sendeeinrichtung um eine Sende-Empfangs-Einrichtung nach Art einer mesh-fähigen Vorrichtung, die mit im Umfeld befindlichen weiteren Sendeeinrichtungen, die wiederum ebenfalls in beziehungsweise an oder als Teil einer Leuchteinrichtung beziehungsweise eines Leuchtmittels angeordnet sein können, ein vermaschtes Netzwerk aufbauen. In diesem Fall kann jede der Sende-Empfangs-Einrichtungen als Netzwerkknoten fungieren, der mit einer oder mehreren anderen Sende-Empfangs-Einrichtungen im gleichen Installationsbereich, vorzugsweise drahtlos, und/oder über das durch die Kommunikationsverbindungen gebildete Kommunikationsnetzwerk des Beleuchtungssystems verbunden ist, vorzugsweise über BLE. Innerhalb dieses vermaschten Netzwerks können Daten zwischen Knoten weitergereicht und verteilt werden.

Vorzugsweise kann das Gesamtsystem um eine oder mehrere weitere mesh-fähige Sende-Empfangs-Einrichtungen erweitert werden, die nicht in beziehungsweise an oder als Teil der Beleuchtungseinrichtung beziehungsweise der Leuchteinrichtung beziehungsweise des Leuchtmittels integriert sind, zum Beispiel nach Art eines batteriebetriebenen Beacons. Durch die Anordnung zusätzlicher Sende-Empfangs-Einrichtungen können zum Beispiel Lücken im Gesamtsystem geschlossen und/oder der Servicebereich, insbesondere nachträglich, erweitert werden.

Dem Grunde nach umfasst die Sendeeinrichtung zumindest eine Sendeeinheit. Sie kann aber ergänzend auch eine Empfangseinheit umfasst, sodass eine Sende-Empfangs-Einrichtung gebildet wird. Darüber hinaus kann die Sendeeinrichtung natürlich auch Kommunikationsschnittstellen insbesondere zur Bereitstellung der Kommunikationsverbindung umfassen. Die Sendeeinrichtung kann deshalb auch eine Sende-Empfangs-Einrichtung sein.

Insbesondere kann bei einem Beleuchtungssystem beziehungsweise einer Beleuchtungseinrichtung beziehungsweise einer Leuchteinrichtung mit integrierter mesh-fähiger Sende-Empfangs-Einrichtung wie zum Beispiel einem Beacon eine Firmware-Aktualisierung erreicht werden. Die Sende-Empfangs-Vorrichtung ist zu diesem Zweck in einem vorgegeben Servicebereich installiert. Durch die Firmware-Aktualisierung sollen zum Beispiel Funktionen nachträglich freigeschaltet, Sicherheitslücken geschlossen und/oder eine Energieeffizienz verbessert werden. Um einen aufwendigen Verteilungsprozess der Firmware-Aktualisierung zum Beispiel über manuelle Verteilung der Daten über jeweilige Direktverbindungen eines Endgerätes zu jeder einzelnen Sende-Empfangs-Einrichtung, entgegenzuwirken, werden die Daten der Firmware-Aktualisierung beziehungsweise des Rechnerprogramms automatisiert über das Mesh-Netzwerk beziehungsweise die Kommunikationsverbindung zwischen den Beleuchtungseinrichtungen verteilt, welches durch die in den Beleuchtungseinrichtungen beziehungsweise Leuchteinrichtungen beziehungsweise Leuchtmitteln integrierten Sende-Empfangs-Einrichtungen aufgebaut wird.

Nachfolgend werden verschiedene Varianten, wie beispielsweise das Firmware-Update innerhalb des Gesamtsystems verteilt werden kann, weiter erläutert. Insbesondere umfasst das Gesamtsystem einen Verbund aus mehreren Sende-Empfangs-Vorrichtungen, die in beziehungsweise an oder als Teil von Beleuchtungseinrichtungen, Leuchteinrichtungen beziehungsweise Leuchtmitteln angeordnet sind.

Vorzugsweise wird vorgeschlagen, dass bei der zweiten der Beleuchtungseinrichtungen geprüft wird, ob die Daten zum Installieren oder Ändern des Rechnerprogramms der zweiten der Beleuchtungseinrichtungen vorgesehen sind. Diese Ausgestaltung berücksichtigt, dass die Beleuchtungseinrichtungen beziehungsweise deren Sendeeinheiten sowie auch deren Rechnereinheiten nicht einen gleichen Funktionsumfang zu haben brauchen. Insofern kann ein Installieren beziehungsweise Ändern des vorhandenen Rechnerprogramms nicht erforderlich sein, eventuell auch Störungen nach sich ziehen. Die Beleuchtungseinrichtung prüft deshalb, ob die empfangenen Daten für die Installation beziehungsweise das Ändern des vorhandenen Rechnerprogramms geeignet sind. Dies kann zum Beispiel anhand von Versionsnummern oder dergleichen erfolgen, die jeweiligen geeigneten Beleuchtungseinrichtungen beziehungsweise Sendeeinrichtungen zugeordnet sind und die in den Daten enthalten sein können. Dadurch kann erreicht werden, dass eine Installation des Rechnerprogramms beziehungsweise ein Ändern des Rechnerprogramms nur dann erfolgt, wenn die Sendeeinrichtung dem Grunde nach hierfür auch geeignet ist.

Darüber hinaus wird vorgeschlagen, dass die zweite der Beleuchtungseinrichtungen die Daten über die Kommunikationsverbindung an wenigstens eine weitere der, insbesondere zweiten, Beleuchtungseinrichtungen übermittelt. Hierdurch kann erreicht werden, dass die erste der Beleuchtungseinrichtungen nicht mit jeder der zweiten der Beleuchtungseinrichtungen unmittelbar in Kommunikationsverbindung zu stehen braucht. Es kann hier eine verkettete Datenübermittlung erreicht werden, wobei die Daten sukzessive von einer der Beleuchtungseinrichtungen zur nächsten der Beleuchtungseinrichtungen übermittelt werden. Dabei kann vorgesehen sein, dass die Daten dahingehend ergänzt werden, dass eine Information über die Beleuchtungseinrichtungen enthalten ist, die diese Daten bereits erhalten haben. Dadurch kann eine Datenzirkulation zwischen den über die Kommunikationsverbindung verbundenen Beleuchtungseinrichtungen vermieden werden.

Vorteilhaft kann vorgesehen sein, dass die Kommunikationsverbindung nach Übermitteln der Daten beendet wird. Die Kommunikationsverbindung braucht bei dieser Ausgestaltung lediglich für das Übermitteln der Daten aktiviert zu sein. Ist eine Datenübermittlung beendet, kann auch die Kommunikationsverbindung deaktiviert werden. Dadurch kann zum Beispiel ein Energieverbrauch reduziert werden.

Weiterhin kann vorgesehen sein, dass die Daten wenigstens bei der ersten der Beleuchtungseinrichtungen in einer Speichereinheit der Beleuchtungseinrichtung gespeichert werden. Dadurch stehen die Daten für weitere Übermittlungen beziehungsweise Installationen auch zu einem späteren Zeitpunkt noch zur Verfügung. Die ersten Beleuchtungseinrichtungen beziehungsweise deren Sendeeinrichtungen brauchen demzufolge nicht unmittelbar zeitgleich ihre Rechnerprogramme zu installieren beziehungsweise zu ändern. Dadurch ist es möglich, die Funktion des Beleuchtungssystems zumindest teilweise auch während des bestimmungsgemäßen Betriebs aufrechtzuerhalten, sodass zumindest ein Teilbetrieb auch während des Installierens beziehungsweise Änderns des Rechnerprogramms aufrechterhalten werden kann. Die Speichereinheit kann Bestandteil der Rechnereinheit sein. Sie kann aber auch eine separate Baugruppe sein, die vorzugsweise von der Sendeeinrichtung umfasst ist.

Weiterhin wird vorgeschlagen, dass die Daten von der ersten Beleuchtungseinrichtung erst nach dem Installieren oder dem Ändern des Rechnerprogramms der ersten Beleuchtungseinrichtung von dieser an die wenigstens zweite der Beleuchtungseinrichtungen übermittelt werden. Diese Ausgestaltung hat den Vorteil, dass zunächst die Funktion des installierten Rechnerprogramms beziehungsweise des geänderten Rechnerprogramms bei der ersten der Beleuchtungseinrichtungen überprüft werden kann, bevor die Daten zu den zweiten der Beleuchtungseinrichtungen übermittelt werden. Sollten sich Störungen zeigen, kann die Übermittlung der Daten an die zweiten der Beleuchtungseinrichtungen unterdrückt werden, sodass zumindest der Betrieb der zweiten der Beleuchtungseinrichtungen zuverlässig fortgeführt werden kann. Diese Ausgestaltung erlaubt es, auch bei durch Störungen beschädigten Daten zumindest teilweise einen zuverlässigen Betrieb des Beleuchtungssystems aufrechtzuerhalten.

Vorteilhaft erweist es sich ferner, wenn das Installieren oder das Ändern des Rechnerprogramms zu einem vorgegebenen Zeitpunkt erfolgt. Der Zeitpunkt kann zum Beispiel in den Daten enthalten sein. Vorzugsweise ist der Zeitpunkt derart gewählt, dass die Funktionalität der Beleuchtungseinrichtung beziehungsweise der Sendeeinrichtung nicht verfügbar zu sein braucht. Beispielsweise kann dies der Fall sein, wenn in einem Service-Bereich zu einem bestimmten Zeitpunkt beziehungsweise in einem bestimmten Zeitraum der Service nicht zur Verfügung gestellt zu werden braucht, beispielsweise wenn in diesem Zeitraum beziehungsweise zu diesem Zeitpunkt keine Nutzer mit Kommunikationsendgeräten vorhanden sind oder dergleichen.

Eine Weiterbildung schlägt vor, dass der Zeitpunkt zumindest von einem Betriebszustand der jeweiligen Beleuchtungseinrichtung abhängt. So kann vorgesehen sein, dass das Installieren des Rechnerprogramms beziehungsweise das Ändern des Rechnerprogramms erst dann erfolgt, wenn zum Beispiel die Funktion der Beleuchtungseinrichtung deaktiviert ist, weil eine Beleuchtungsfunktion dem Grunde nach zu dem gewählten Zeitpunkt nicht erforderlich ist. Der Zeitpunkt kann grundsätzlich auch einen entsprechenden Zeitraum bestimmen. Darüber hinaus können auch Zeitpunkte beziehungsweise Zeiträume vorgesehen sein, zu denen das Beleuchtungssystem insgesamt deaktiviert ist. Dies kann beispielsweise der Fall sein, wenn eine Wartung des gesamten Beleuchtungssystems vorgenommen wird, ein Bereich, in dem sich das Beleuchtungssystems befindet, nicht genutzt wird, und/oder dergleichen.

Besonders vorteilhaft erweist es sich, wenn der Zeitpunkt zum Installieren oder Ändern des Rechnerprogramms von einer in den Daten enthaltenen Installations-Information abhängt. So kann beispielsweise vorgesehen sein, dass das Installieren durch eine Datumsangabe gesteuert werden kann. Dadurch kann zum Beispiel sichergestellt werden, dass mit einem Datumswechsel sämtliche der Beleuchtungseinrichtungen beziehungsweise der Sendeeinrichtungen im Wesentlichen zeitgleich das Rechnerprogramm installieren beziehungsweise ändern. Ergänzend zum Datum kann natürlich eine Uhrzeit vorgesehen sein. Dies erlaubt es, die Daten zunächst an alle der relevanten beziehungsweise gewünschten Beleuchtungseinrichtungen beziehungsweise Sendeeinrichtungen zu verteilen, und erst dann, wenn die Daten an alle relevanten beziehungsweise gewünschten Beleuchtungseinrichtungen beziehungsweise Sendeeinrichtungen verteilt sind, eine Installation beziehungsweise Ändern des Rechnerprogramms vorzunehmen. Dadurch kann für das gesamte Beleuchtungssystem ein einheitliches Funktionsszenario erreicht werden.

Weiterhin kann vorgesehen sein, dass der Zeitpunkt von der Verfügbarkeit von elektrischer Energie für einen bestimmungsgemäßen Betrieb der jeweiligen Beleuchtungseinrichtung abhängt. So kann vorgesehen sein, dass der Zeitpunkt so gewählt wird, dass ausreichend elektrische Energie zur Verfügung steht, um die Installation des Rechnerprogramms beziehungsweise das Ändern des Rechnungsprogramms durchführen zu können. Dieser Zeitpunkt kann zum Beispiel von einem Betriebszeitraum beziehungsweise Betriebszeitpunkt des gesamten Beleuchtungssystems abhängig sein. Es kann auch vorgesehen sein, dass eine serielle Installation beziehungsweise ein serielles Ändern der Rechnerprogramme ermöglicht wird, sodass ein Gesamtenergieverbrauch des Beleuchtungssystems durch das Installieren der Rechnerprogramme beziehungsweise das Ändern der Rechnerprogramme begrenzt werden kann.

Weiterhin wird vorgeschlagen, dass die erste der Beleuchtungseinrichtungen eine neue zweite Beleuchtungseinrichtung erkennt und die Daten an die neue zweite der Beleuchtungseinrichtungen automatisiert übermittelt. Diese Ausgestaltung erlaubt es, insbesondere nachträglich, hinzugefügte Beleuchtungseinrichtungen zum Beleuchtungssystem zu erkennen und durch das Übermitteln der Daten deren Rechnerprogramme zu aktualisieren beziehungsweise entsprechend mit einem Rechnerprogramm zu versehen, sodass eine bestimmungsgemäße Funktion im Rahmen des gesamten Beleuchtungssystems erreicht werden kann. Es ist also bei dieser Ausgestaltung nicht erforderlich, die neu hinzugefügte zweite der Beleuchtungseinrichtungen vorher mit einem geeigneten Rechnerprogramm beziehungsweise einer geeigneten Version eines Rechnerprogramms zu versehen. Dies geschieht nach der mechanischen und/oder elektrischen Installation automatisch im bestimmungsgemäßen Betrieb der neuen zweiten Beleuchtungseinrichtung im Rahmen des Beleuchtungssystems. Dadurch kann die Anpassung des Beleuchtungssystems erheblich vereinfacht werden. Darüber hinaus erlaubt diese Ausgestaltung auch eine Vereinfachung in Bezug auf eine Wartung, beispielsweise einen Austausch einer defekten Beleuchtungseinrichtung beziehungsweise einer defekten Sendeeinrichtung und/oder dergleichen.

Gemäß einer Weiterbildung der Erfindung wird vorgeschlagen, dass während des Installierens oder des Änderns des Rechnerprogramms wenigstens eine vorgebbare aktive Funktionalität der Beleuchtungseinrichtung deaktiviert und/oder eine vorgebbare deaktivierte Funktionalität aktiviert wird. Dadurch kann erreicht werden, dass ein ungestörtes Installieren beziehungsweise Ändern des Rechnerprogramms realisiert werden kann. Dadurch, dass eine Funktionalität, die durch das Installieren beziehungsweise Ändern des Rechnerprogramms gestört werden könnte, deaktiviert wird, kann die Zuverlässigkeit des Beleuchtungssystems insgesamt verbessert werden. Das gleiche gilt dem Grunde nach für den Fall, dass währen des Installierens beziehungsweise Änderns des Rechnerprogramm eine ansonsten deaktivierte Funktionalität aktiviert wird. Eine solche deaktivierte Funktionalität könnte zum Beispiel eine Warnmeldung sein, die mitteilt, dass die Beleuchtungseinrichtung beziehungsweise deren Sendeeinrichtung derzeit nicht verfügbar ist oder dergleichen.

Ferner wird vorgeschlagen, dass durch das Installieren oder das Ändern des Rechnerprogramms eine in einer jeweiligen der Beleuchtungseinrichtungen verfügbare Funktionalität aktiviert oder deaktiviert wird. Diese Ausgestaltung berücksichtigt, dass die Beleuchtungseinrichtung beziehungsweise deren Sendeeinrichtung hardwaretechnisch zum Bereitstellen einer Funktionalität ausgebildet ist, die mittels des Rechnerprogramms aktiviert beziehungsweise deaktiviert werden kann. Auf diese Weise kann zum Beispiel eine Funktionalität der Beleuchtungseinrichtung beziehungsweise der Sendeeinrichtung ergänzt oder auch begrenzt werden, je nach Bedarf. Insbesondere können diesbezüglich natürlich auch zusätzliche Funktionalitäten, die sich erst nach Installieren des Beleuchtungssystems als zweckmäßig zeigen, ergänzend aktiviert werden. Darüber hinaus kann natürlich vorgesehen sein, dass andere Funktionalitäten, insbesondere solche die mit den neuen Funktionalitäten nicht kompatibel sind, entsprechend deaktiviert werden.

Vorzugsweise verfügt das Beleuchtungssystems beziehungsweise die Beleuchtungseinrichtung des betreffenden Service-Bereichs über eine separate, beispielsweise drahtlose oder drahtgebundene, Kommunikationsverbindung zu einer IT-Infrastruktur. Ausgehend von dieser IT-Infrastruktur, zum Beispiel ein Dienste-Server, eine Cloud, ein Content-Management-System und/oder dergleichen, welche automatisch Firmware-Aktualisierungen von zentralen Servern ziehen und verwalten kann, werden die Daten eines Firmware-Updates beispielsweise über ein Gateway und einen Kommunikationskanal des Lichtmanagementsystems des Beleuchtungssystems beziehungsweise der Beleuchtungseinrichtung an die mesh-fähige Sende-Empfangs-Vorrichtung übertragen. Hierfür ist vorzugsweise eine interne Kommunikationsverbindung im Beleuchtungssystem mit integrierter Sende-Empfangs-Vorrichtung vorgesehen. Anschließend kann die Firmware-Aktualisierung auf einen Zwischenspeicher der Sende-Empfangs-Einrichtung kopiert und nach einer Überprüfung auf einen Hauptspeicher installiert werden. Alternativ kann die Firmware auch direkt in einem Hauptspeicher gespeichert werden. In einem nächsten Schritt können dann die Daten des Firmware-Updates an alle weiteren mesh-fähigen Sende-Empfangs-Einrichtungen verteilt werden, wobei gegebenenfalls festgelegt werden kann, welche Voraussetzungen die Sende-Empfangs-Einrichtungen erfüllen müssen, um das Fimware-Update zu empfangen oder zu welchem Zeitpunkt die Verteilung des Firmware-Updates erfolgen soll. Die Übertragung kann dabei drahtlos, beispielsweise über den BLE-Standard oder dergleichen oder auch drahtgebunden, zum Beispiel über ein bestehendes Kommunikationsnetzwerk des Beleuchtungssystems oder dergleichen, erfolgen. Für die Verteilung selbst kann beispielsweise schrittweise ein Mesh-Netzwerk aufgebaut oder ein bereits bestehendes Mesh-Netzwerk benutzt werden, in welchem die Sende-Empfangs-Einrichtungen beispielsweise als Netzwerkknoten, fungieren und die Informationen von Knoten zu Knoten weitergereicht werden können.

Ausgehend von der IT-Infrastruktur können die Daten des Firmware-Updates unmittelbar drahtlos über das Gateway an eine vorzugweise primäre mesh-fähige Sende-Empfangs-Einrichtung übertragen werden. Anschließend kann die Firmware-Aktualisierung auf einen Zwischenspeicher der Sende-Empfangs-Einrichtung kopiert und nach der Überprüfung auf dem Hauptspeicher installiert werden. Alternativ können die Daten für das Firmware-Update auch direkt in den Hauptspeicher geschrieben werden. In einem nächsten Schritt können dann die Daten des Firmware-Updates an alle weiteren mesh-fähigen Sende-Empfangs-Einrichtungen verteilt werden, wobei gegebenenfalls festgelegt werden kann, welche Voraussetzungen die Sende-Empfangs-Einrichtungen erfüllen müssen, um das Firmware-Update zu empfangen oder zu welchem Zeitpunkt die Verteilung des Firmware-Updates erfolgen soll. Die Übertragung kann dabei - wie zuvor erläutert - erfolgen.

Weiterhin kann vorgesehen sein, dass eine direkte Kommunikationsverbindung von einem Kommunikationsendgerät, beispielsweise einem Mobilfunkendgerät, wie einem Smartphone oder dergleichen, zu einer der Sende-Empfangs-Einrichtungen über einen drahtlosen Kommunikationskanal, vorzugsweise gemäß dem BLE-Standard oder dergleichen, hergestellt wird. Über diese Verbindung können dann die Daten des Firmware-Updates übertragen und anschließend auf der Send-Empfangs-Einrichtung installiert werden. Das Verfahren zur Verteilung auf die, insbesondere im Umfeld befindlichen, Sende-Empfangs-Einrichtungen erfolgt, wie bereits zuvor beschrieben.

Weiterhin kann vorgesehen sein, dass ein Service-Bereich bereits mit mesh-fähigen Sende-Empfangs-Einrichtungen oder auch Sendeeinrichtungen in beziehungsweise an oder als Teil der Beleuchtungseinrichtungen beziehungsweise der Leuchteinrichtungen beziehungsweise der Leuchtmittel ausgestattet ist. Es braucht nun lediglich eine der vorhandenen Sende-Empfangs-Einrichtungen beziehungsweise Sendeeinrichtungen ausgetauscht oder eine zusätzliche Sende-Empfangs-Einrichtung beziehungsweise Sendeeinrichtung zusätzlich im Service-Bereich installiert zu werden. Die neue Sende-Empfangs-Einrichtung beziehungsweise Sendeeinrichtung verfügt dabei vorzugsweise über eine aktuelle Firmware-Version und bindet sich in das vorhandene Mesh-Netzwerk ein. Die Firmware-Version kann sowohl eine Software-Version als auch eine Update-Version sein. Es kann auch eine Kombination hiervon vorgesehen sein. Die neue Sende-Empfangs-Einrichtung kann nun zum Beispiel die Versionsnummer von installierter Firmware beziehungsweise Rechnerprogrammen von anderen vorhandenen Sende-Empfangs-Einrichtungen über das Mesh-Netzwerk abfragen und die eigene aktuelle Firmware über dieses auf die anderen Sende-Empfangs-Einrichtungen übertragen, indem entsprechende Daten über die Kommunikationsverbindung übermittelt werden. Das Übermitteln kann davon abhängig sein, dass die vorhandenen Sende-Empfangs-Einrichtungen über eine ältere Firmware verfügen. Dieses Konzept kann auch als automatische Verteilung der Daten mittels retrofit bezeichnet werden.

Darüber hinaus besteht die Möglichkeit, dass eine, insbesondere primäre, Sende-Empfangs-Einrichtung über einen Zugang zu einem mobilen Datennetz, wie zum Beispiel GSM oder dergleichen, verfügt. Dieser Zugang kann zum Beispiel über einen integrierten HotSpot mittels einer SIM-Karte erfolgen. Über diesen Zugang kann die Sendeeinrichtung beziehungsweise Sende-Empfangs-Einrichtung immer die Daten bezüglich des aktuellen Rechnerprogramms von der zentralen Infrastruktur beziehen. Das Verfahren zur Verteilung auf die im Umfeld befindlichen Sendeeinrichtungen beziehungsweise Sende-Empfangs-Einrichtungen kann gemäß dem bereits oben beschriebenen Verfahren erfolgen. Das Verfahren der Erfindung erlaubt es ferner, eine Funktionsmodifizierung der Sendeeinrichtung beziehungsweise Sende-Empfangs-Einrichtung auch nach erstmaliger Inbetriebnahme im Rahmen eines Firmware-Updates in einem Service-Bereich zu ermöglichen. Dabei können Funktionen von Sendeeinrichtungen beziehungsweise Sende-Empfangs-Vorrichtungen in beziehungsweise an oder als Teil des Beleuchtungssystems beziehungsweise der Beleuchtungseinrichtung beziehungsweise des Leuchmittels sowohl frei- als auch abgeschaltet werden. Hieraus ergibt sich zum Beispiel die Möglichkeit, eine vorgegebene Funktionalität in einem Service-Bereich kostenpflichtig anzubieten.

So kann beispielsweise ein Freischalten einer möglichen Mesh-Funktion nach einer erstmaligen Inbetriebnahme vorgesehen sein. Sende-Empfangs-Vorrichtungen können nachträglich, zum Beispiel gegen eine Gebühr an einen Hersteller, zu mesh-fähigen Sende-Empfangs-Vorrichtungen modifiziert werden, vorausgesetzt, diese Funktionsveränderung ist hardwareseitig verfügbar. Die entsprechen modifizierten, also mesh-fähigen, Sende-Empfangs-Vorrichtungen können dann untereinander ein vermaschtes Kommunikationsnetzwerk ausbilden, das heißt, jede der Sende-Empfangs-Vorrichtungen kann als Netzwerkknoten fungieren, der mit einer oder mehreren anderen Sende-Empfangs-Vorrichtungen im gleichen Installationsbereich, vorzugsweise drahtlos, und/oder über das Kommunikationsnetzwerk des Beleuchtungssystems verbunden sein kann, beispielsweise gemäß dem BLE-Standard. Innerhalb dieses vermaschten Netzwerks können dann Daten von Knoten zu Knoten übermittelt und dadurch verteilt werden.

Dies kann beispielsweise gemäß der folgenden Schritte erfolgen:
1.Ausgehend von einer IT-Infrastruktur kann über den Kommunikationskanal eines Lichtmanagementsystems des Beleuchtungssystems auf die in den Beleuchtungseinrichtungen des Beleuchtungssystems integrierten Sendeeinrichtungen beziehungsweise Sende-Empfangs-Vorrichtungen zugegriffen werden. Das Lichtmanagementsystem kann dabei als initiale Kommunikationssystem des Gesamtsystems verstanden werden, dass zur Verteilung der Daten zur Funktionsmodifizierung genutzt wird.
2. In einem nächsten Schritt können die Daten auf die Sendeeinrichtungen beziehungsweise Sende-Empfangs-Vorrichtungen, wie zum Beispiel Beacons oder dergleichen, aufgespielt und installiert werden. Die mesh-fähigen Sende-Empfangs-vorrichtungen können dann als ein zweites, redundantes Mesh-Kommunikationssystem des Gesamtsystems dienen, zum Beispiel zur Absicherung des Lichtmanagementsystems oder dergleichen.
3. Die Sende-Empfangs-Vorrichtungen können vorzugsweise über einen, insbesondere drahtlosen, Rückkanal verfügen. Der Rückkanal - ein äquivalent zu einer Kommunikationsverbindung - kann zum Beispiel über das Mesh-Netzwerk des Gesamtsystems realisiert werden und kann mit der IT-Infrastruktur verbunden werden. So können beispielsweise Informationen zum Systemstatus des Beleuchtungssystems an eine Datenverarbeitung übermittelt und ausgewertet werden, zum Beispiel im Rahmen eines Condition-Monitoring oder dergleichen. Dabei können folgende Varianten des Rückkanals vorgesehen werden:
4. Es kann vorgesehen sein, dass Daten, zum Beispiel bezüglich eines Statuses des Beleuchtungssystems, zunächst von jeder der Sende-Empfangs-Vorrichtungen des Beleuchtungssystems an die, insbesondere primäre, Sende-Empfangs-Vorrichtung übermittelt werden. Anschließend übermittelt die primäre Sende-Empfangs-Vorrichtung die Daten über das Lichtmanagementsystem und das Gateway zur Datenverarbeitung.

Darüber hinaus besteht die Möglichkeit, derartige Daten von jeder Sende-Empfangs-Vorrichtung des Beleuchtungssystems unmittelbar über das Gateway zur Datenverarbeitung weiterzureichen.

Weiterhin besteht die Möglichkeit, derartige Daten zunächst von jeder Sende-Empfangs-Vorrichtung des Beleuchtungssystems an die, insbesondere primäre, Sende-Empfangs-Vorrichtung zu übermitteln und anschließend die Daten durch die, insbesondere primäre, Sende-Empfangs-Vorrichtung unmittelbar über das Gateway zur Datenverarbeitung zu übermitteln. Ferner wird vorgeschlagen, dass die Daten über ein Kommunikationsendgerät bereitgestellt werden. Auf diese Weise kann mittels des Kommunikationsendgerätes eine Kommunikationsverbindung zwischen der Sendeeinrichtung beziehungsweise dem Beacon einerseits und der Datenquelle andrerseits bereitgestellt werden. Dadurch braucht die Sendeeinrichtung beziehungsweise der Beacon nicht ausgebildet zu sein, eine separate Kommunikationsverbindung zur Datenquelle herstellen zu können. Es kann zu Beispiel vorgesehen sein, dass die Kommunikationsverbindung zur Datenquelle automatisiert hergestellt wird, sobald das Kommunikationsendgerät in Kommunikationsreichweite zur Sendeeinrichtung beziehungsweise zum Beacon ist. Darüber hinaus kann aber auch vorgesehen sein, dass zum Herstellen dieser Kommunikationsverbindung eine aktive Eingabe eines Nutzers des Kommunikationsendgerätes erforderlich ist. So kann vorgesehen sein, dass der Nutzer auf einer Anzeigeeinheit des Kommunikationsendgerätes eine Meldung angezeigt bekommt, dass diese Kommunikationsverbindung auf eine manuelle Eingabe des Nutzers hin hergestellt werden kann. Es ist hier also nicht erforderlich, ein separates Gateway vorzusehen, um die gewünschte Kommunikationsverbindung herstellen zu können. Das Kommunikationsendgerät kann beispielsweise in die Sendeeinrichtung beziehungsweise den Beacon integriert sein.

Dem Grunde nach kann auch vorgesehen sein, dass die Sendeeinrichtung beziehungsweise der Beacon ausgebildet ist, in ein Mobilfunknetzwerk kommunikationstechnisch eingebunden zu werden. Zu diesem Zweck kann ferner vorgesehen sein, dass die Sendeeinrichtung beziehungsweise der Beacon zur Aufnahme einer entsprechenden Berechtigung ausgebildet ist, zum Beispiel indem in der Sendeeinrichtung beziehungsweise dem Beacon eine SIMM-Karte oder dergleichen angeordnet, insbesondere angeschlossen, werden kann. Die Beleuchtungseinrichtung kann dann unmittelbar über das Mobilfunknetzwerk eine Kommunikationsverbindung über das jeweilige Mobilfunknetzwerk, insbesondere zur Datenquelle, herstellen.

Schließlich wird vorgeschlagen, dass die Datenquelle zumindest teilweise vom Kommunikationsendgerät bereitgestellt wird. Die Datenquelle kann somit vorzugsweise vom Kommunikationsendgerät umfasst sein, zum Beispiel indem eine Speichereinheit des Kommunikationsendgerätes eine Datenbank umfasst, die der Datenquelle zugeordnet ist oder dergleichen.

Die bezüglich des erfindungsgemäßen Verfahrens angegebenen Ausführungsvarianten sowie Vorteile und Wirkungen gelten gleichermaßen sinngemäß auch für das erfindungsgemäße Beleuchtungssystem sowie umgekehrt. Dabei können jeweilige Verfahrensmerkmale als funktionelle Merkmale für hierzu geeignete Mittel angesehen werden.

Weitere Vorteile und Merkmale ergeben sich durch die im Folgenden angegebenen Ausführungsbeispiele anhand der beigefügten Figuren. In den Figuren bezeichnen gleiche Bezugszeichen gleiche Merkmale und Funktionen.

Es zeigen:
- Fig. 1: in einer schematischen Blockdarstellung eine Integration eines Beacon als Sendeeinrichtung in eine Beleuchtungseinrichtung eines mehrere Beleuchtungseinrichtungen aufweisenden Beleuchtungssystems,
- Fig. 2: eine schematische Blockdarstellung einer ersten Ausgestaltung für ein Beleuchtungssystem gemäß der Erfindung,
- Fig. 3: eine schematische Blockdarstellung einer zweiten Ausgestaltung für ein Beleuchtungssystem gemäß der Erfindung,
- Fig. 4: eine schematische Blockdarstellung einer dritten Ausgestaltung für ein Beleuchtungssystem gemäß der Erfindung,
- Fig. 5: eine schematische Blockdarstellung einer vierten Ausgestaltung für ein Beleuchtungssystems gemäß der Erfindung und
- Fig. 6: eine schematische Blockdarstellung einer fünften Ausgestaltung für ein Beleuchtungssystem gemäß der Erfindung.

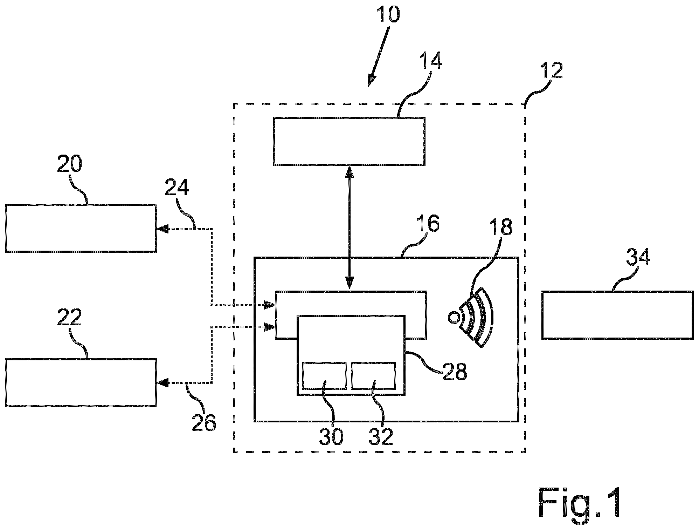

Fig. 1 zeigt in einer schematischen Blockdarstellung ein Beleuchtungssystem 10, welches eine Mehrzahl von Beleuchtungseinrichtungen 12, 20 umfasst. Jede der Beleuchtungseinrichtungen 12, 20 weist eine Leuchteinrichtung 14 mit einem oder auch mehreren nicht weiter dargestellten Leuchtmitteln zum Abgeben von Licht sowie einen Beacon 16 als Sendeeinrichtung auf. Der Beacon 16 ist in oder unmittelbar an der Leuchteinrichtung 14 angeordnet. Der Beacon 16 sendet ein Signal 18 mit einer für den Beacon 16 spezifischen Identifikationsinformation drahtlos aus. Das Aussenden erfolgt vorliegend unter Nutzung von Nahfunk basierend auf einem Bluetooth-Low-Energy-Protokoll (BLE).

Der Beacon 16 umfasst eine Steuereinheit 28, die eine Rechnereinheit 30 sowie eine mit der Rechnereinheit 30 kommunikationstechnisch gekoppelte Speichereinheit 32 umfasst. In der Speichereinheit 32 ist ein ablauffähiges Rechnerprogramm für die Rechnereinheit 30 gespeichert, sodass mit der Rechnereinheit 30 eine vorgegebene Funktionalität bereitgestellt werden kann. Vorliegend dient die Funktionalität dazu, den Beacon 16 sowie auch die Leuchteinrichtung 14 in vorgebbarer Weise zu betreiben. Die weiteren Beleuchtungseinrichtungen 20 sind dem Grunde nach vergleichbar zu der Beleuchtungseinrichtung 12 aufgebaut.

Vorliegend ist der Beacon 16 als Sende-Empfangs-Einrichtung ausgebildet, der neben dem Aussenden des Signals 18 auch eine bidirektionale Kommunikationsverbindung 24 nutzen kann. Über die Kommunikationsverbindung 24 steht die Beleuchtungseinrichtung 12, und hier insbesondere der Beacon 16, mit den weiteren Beleuchtungseinrichtungen 20 in Kommunikationsverbindung, die entsprechend ausgebildet sind.

Die Kommunikationsverbindung 24 ist vorliegend eine bidirektionale Kommunikationsverbindung, die ebenfalls auf Nahfunk basiert und den vorgenannten BLE-Standard nutzt. Darüber hinaus steht die Beleuchtungseinrichtung 12, und hier ebenfalls wieder insbesondere der Beacon 16, über eine weitere Kommunikationsverbindung 26 mit einer Infrastruktureinrichtung 22 in Kommunikationsverbindung, über die Daten betreffend einen bestimmungsgemäßen Betrieb der Beleuchtungseinrichtung 12 sowie auch Daten bezüglich der weiteren Beleuchtungseinrichtungen 20 ausgetauscht werden können. Die Beleuchtungseinrichtung 12, und hier insbesondere deren Beacon 16, dienen demnach zugleich auch als Einrichtung zum Weiterleiten von entsprechenden Daten von der Infrastruktureinrichtung 22 zu den Beleuchtungseinrichtungen 20 und umgekehrt, zum Beispiel nach Art eines Netzwerkknotens.

Das vom Beacon 16 beziehungsweise den Beacons der Beleuchtungseinrichtungen 20 ausgesendete Signal 18 kann von einem oder auch mehreren Kommunikationsendgeräten 34 empfangen und ausgewertet werden. Das Kommunikationsendgerät 34 ist vorliegend ein Mobilfunkendgerät nach Art eines Smartphones. In der vorliegenden Ausgestaltung ist lediglich vorgesehen, dass die Kommunikationsendgeräte 34 das Signal 18 empfangen und auswerten. Eine Kommunikation erfolgt deshalb lediglich unidirektional. Nicht dargestellte Beacons der weiteren Beleuchtungseinrichtungen 20 können ebenfalls mit dem Kommunikationsendgerät 34 empfangen werden. Dadurch können mittels des Kommunikationsendgeräts 34 eine Reihe von Diensten zur Verfügung gestellt beziehungsweise ermöglicht werden, die es einem Nutzer des Kommunikationsendgeräts 34 ermöglicht, unterschiedlichste zusätzliche Dienste zu nutzen. Innerhalb eines vorgegebenen Bereichs, in dem die Beleuchtungseinrichtungen 12, 20 angeordnet sind und in dem das Signal 18 vom Kommunikationsendgerät 34 empfangen werden kann, kann sich der Nutzer des Kommunikationsendgeräts 34 damit besser orientieren beziehungsweise navigieren sowie auch andere lokale, insbesondere digitale Dienste ausfindig machen und nutzen, wie zum Beispiel Apps, App-Funktionen, Google Maps, Lightify, Lichtsteuerung und/oder dergleichen. Das Beleuchtungssystem 10 mit den in den jeweiligen Beleuchtungseinrichtungen 12, 20 angeordneten Beacons 16 ermöglicht für die vorgenannten Nutzerpotenziale ein Ortungsbeziehungsweise Orientierungssystem. Insbesondere ist es möglich, eine genaue Selbstortung des Kommunikationsendgerätes 34 bereitzustellen, wodurch Dienste nutzbar werden, wie etwa die Navigation oder die Bereitstellung von ortsspezifischen Informationen.

Ein Aspekt der Beacon-Technologie ist die Möglichkeit zur Konfiguration typischer Parameter, wie zum Beispiel eine Signalstärke und/oder ein Sendeintervall des Signals 18 des Beacon 16. Mit unterschiedlichen Konfigurationen können verschiedene Anwendungsszenarien individuell unterstützt werden. Wird zum Beispiel eine hohe Servicequalität, beispielsweise eine genaue Lokalisierung in kurzen Abständen, gewünscht, wie sie insbesondere bei einer Indoor-Navigation erforderlich ist, können vorzugsweise sehr kurze Sendeintervalle konfiguriert sein.

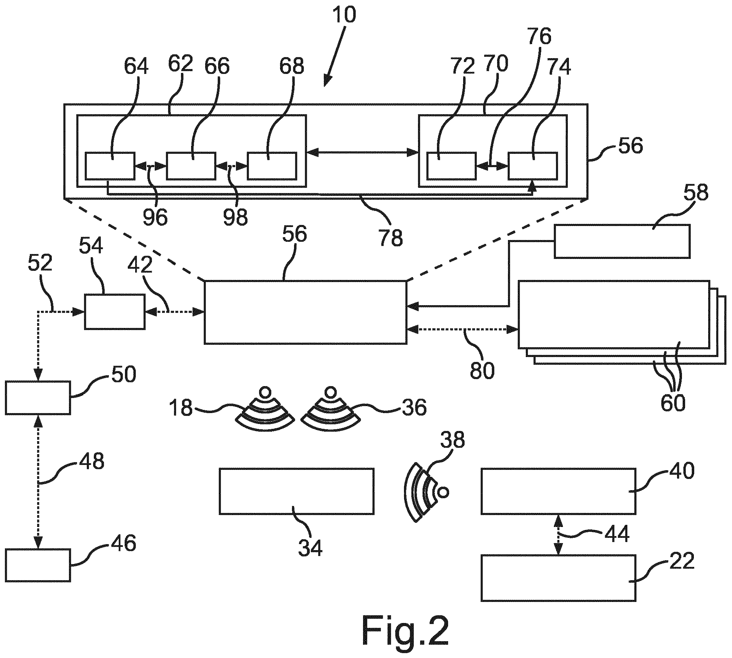

Fig. 2 zeigt in einer schematischen Blockdarstellung eine Ausgestaltung für ein Beleuchtungssystem 10, welches auf dem zuvor bereits beschriebenen Beleuchtungssystem 10 basiert. Auch hier umfasst das Beleuchtungssystem 10 eine Mehrzahl von mittels einer jeweiligen Rechnereinheit 30 gesteuerten Beleuchtungseinrichtungen 56, 60, die dem Grunde nach auf den Beleuchtungseinrichtungen 12, 20 - wie zur Fig. 1 beschrieben - basieren. Die Beleuchtungseinrichtung 56 ist in einem oberen Bereich der Fig. 2 mit ihren Komponenten exemplarisch dargestellt. Die Rechnereinheit 30 ist hier Bestandteil einer Steuereinheit 72, die dem Grunde nach der Steuereinheit 28 - wie ebenfalls zur Fig. 1 beschrieben - entspricht und die ihrerseits Teil eines Beacon 70 als Sendeeinrichtung ist. Der Beacon 70 basiert deshalb hinsichtlich seiner Funktion dem Grunde nach auf dem Beacon 16, wie er bereits zur Fig. 1 beschrieben wurde. Der Beacon 70 ist vorliegend wieder an beziehungsweise in oder als Teil einer Leuchteinrichtung 62 angeordnet, die ebenfalls Bestandteil der Beleuchtungseinrichtungen 56, 60 ist und die in vorgebbarer Weise Licht abgibt.

Wie aus dem oberen Bereich der Fig. 2 ersichtlich ist, umfasst die Leuchteinrichtung 62 vorliegend ein elektronisches Vorschaltgerät 64, eine Energieschnittstelle 66, die über einen Energieübertragungskanal 96 an das elektronische Vorschaltgerät 64 angeschlossen ist, sowie eine Leuchtdiodenanordnung 68, die über einen weiteren Energieübertragungskanal 98 an die Energieschnittstelle 66 angeschlossen ist. Über die Energieübertragungskanäle 96, 98 wird die Leuchtdiodenanordnung 68 durch das elektronische Vorschaltgerät 64 in vorgebbarer Weise mit elektrischer Energie versorgt, sodass die Leuchteinrichtung 62 Licht in vorgebbarer Weise abgibt.

Das elektronische Vorschaltgerät 64 versorgt ferner über einen Energieübertragungskanal 78 eine Energieschnittstelle 74 des Beacon 70, die über einen Energieübertragungskanal 76 die Steuereinheit 72 mit elektrischer Energie versorgt. Dadurch kann der Beacon 70 in vorgebbarer Weise betrieben werden, insbesondere zur Aussendung des Signals 18. Aus Fig. 2 ist ferner ersichtlich, dass die Leuchteinrichtung 62 Licht abgibt, welches mit dem Bezugszeichen 36 bezeichnet ist. Die Beleuchtungseinrichtung 56 ist ferner an eine Netzversorgung 58 angeschlossen, die elektrische Energie aus einem öffentlichen Energieversorgungsnetz bezieht und der Beleuchtungseinrichtung 56 zur Verfügung stellt.

Das Signal 18, das vom Beacon 70 ausgesendet wird, kann - wie bereits zur Fig. 1 erläutert - mittels des Kommunikationsendgeräts 34 empfangen werden und dazu dienen, weitere Nutzungen beziehungsweise Dienste zur Verfügung zu stellen. Darüber hinaus kann das Kommunikationsendgerät 34 über eine Kommunikationsverbindung 38, die als Nahfunkverbindung ausgebildet ist, mit einem Router 40 in Kommunikationsverbindung stehen. Der Router 40 ist über eine leitungsgebundene Kommunikationsverbindung 44 an eine Infrastruktureinrichtung 22 angeschlossen, die vorliegend wie die Infrastruktureinrichtung 22 gemäß Fig. 1 einen Zugang zum Internet oder zu einem zentralen Diensteserver bereitstellt.

Die Beleuchtungseinrichtung 56 ist vorliegend ferner an ein Lichtmanagementsystem 54 mittels einer Kommunikationsverbindung 42 angeschlossen. Das Lichtmanagementsystem 54 seinerseits ist über eine Kommunikationsverbindung 52 an ein Gateway 50 und dieses über eine Kommunikationsverbindung 48 an ein Content-Management-System 46 angeschlossen. Dadurch können der Beleuchtungseinrichtung 56 vom Content-Management-System 46 Daten zur Verfügung gestellt werden. Vorliegend ist lediglich die Beleuchtungseinrichtung 56 zur im Wesentlichen unmittelbaren Verbindung mit dem Content-Management-System 46 vorgesehen.

Ferner sind weitere Beleuchtungseinrichtungen 60 im Beleuchtungssystem 10 vorgesehen, von denen in Fig. 2 lediglich drei dargestellt sind, die jeweils über eine Kommunikationsverbindung 80 mit der Beleuchtungseinrichtung 56 in Kommunikationsverbindung stehen. Die Kommunikationsverbindung 80 ist vorliegend eine Mesh-Kommunikationsverbindung unter Nutzung von Nahfunk auf Basis des BLE-Standards.

Vorliegend ist vorgesehen, dass die Beleuchtungseinrichtungen 56, 60 jeweils eine Rechnereinheit 30 umfassen, die zu deren Steuerung dient. Zu diesem Zweck ist in jeder der Beleuchtungseinrichtungen 56, 60 ein ablauffähiges Rechnerprogramm vorgesehen.

Zum Installieren oder Ändern des ablauffähigen Rechnerprogramms werden dem zu installierenden oder zu ändernden Rechnerprogramm entsprechende Daten von dem Content-Management-System 46 als Datenquelle bereitgestellt, die Daten an die Beleuchtungseinrichtungen 56, 60 übermittelt und basierend auf den übermittelten Daten das Rechnerprogramm bei den jeweiligen Rechnereinheiten 30 der Beleuchtungseinrichtungen 56, 60 automatisiert installiert oder ein bereits installiertes Rechnerprogramm automatisiert geändert.

In der vorliegenden Ausgestaltung ist vorgesehen, dass eine erste der Beleuchtungseinrichtungen, hier die Beleuchtungseinrichtung 56, die Daten vom Content-Management-System 46 über das Gateway 50 und das Lichtmanagementsystem 54 erhält und entweder das den Daten entsprechende Rechnerprogramm installiert oder ein vorhandenes Rechnerprogramm entsprechend der Daten ändert.

Darüber hinaus ist vorgesehen, dass zum Installieren oder Ändern des Rechnerprogramms bei zweiten der Beleuchtungseinrichtungen, hier die Beleuchtungseinrichtungen 60, die erste Beleuchtungseinrichtung 56 die Daten über die Kommunikationsverbindung 80 an die Beleuchtungseinrichtungen 60 übermittelt. Dort wird dann ebenfalls das Rechnerprogramm entsprechend der Daten installiert beziehungsweise ein vorhandenes Rechnerprogramm entsprechend geändert. Das Rechnerprogramm kann insbesondere eine Firmware sein.

Es ist also bei dieser Ausgestaltung nicht mehr erforderlich, zum Updaten der Firmware jede einzelne der Beleuchtungseinrichtungen 56, 60 kommunikationstechnisch zu koppeln und eine einzelne Installation beziehungsweise Änderung des Rechnerprogramms vorzunehmen. Es braucht lediglich wenigstens eine der Beleuchtungseinrichtungen, hier die Beleuchtungseinrichtung 56, mit den entsprechenden Daten versorgt zu werden, die dann automatisiert an die weiteren Beleuchtungseinrichtungen, hier die Beleuchtungseinrichtungen 60, übermittelt werden. In allen Beleuchtungseinrichtungen 56, 60 wird dann das entsprechende Rechnerprogramm installiert beziehungsweise geändert.

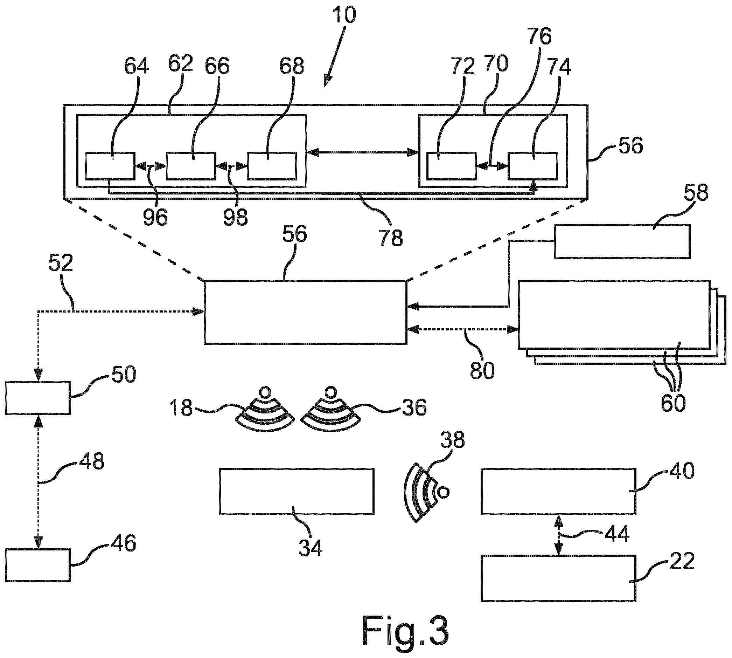

Fig. 3 zeigt eine schematische Bockdarstellung für eine weitere Ausgestaltung eines Beleuchtungssystems 10, wie es bereits anhand von Fig. 2 ausführlich erläutert wurde. Im Unterschied zur Ausgestaltung gemäß Fig. 2 ist bei der Ausgestaltung gemäß Fig. 3 vorgesehen, dass das Gateway 50 über die Kommunikationsverbindung 52 unmittelbar an die Beleuchtungseinrichtung 56 angeschlossen ist. Ein Lichtmanagementsystem, wie das Lichtmanagementsystem 54 in Fig. 2, ist hier nicht erforderlich beziehungsweise zwischengeschaltet. Der Funktionsumfang entspricht jedoch ansonsten im Wesentlichen dem, was bereits zur Fig. 2 erläutert worden ist, weshalb ergänzend auf diese Ausführungen verwiesen wird.

Auch hier erhält die Beleuchtungseinrichtung 56 die Daten für das Installieren oder Ändern des ablauffähigen Rechnerprogramms vom Content-Management-System 46 als Datenquelle. Lediglich das Gateway 50 ist hier zwischengeschaltet.

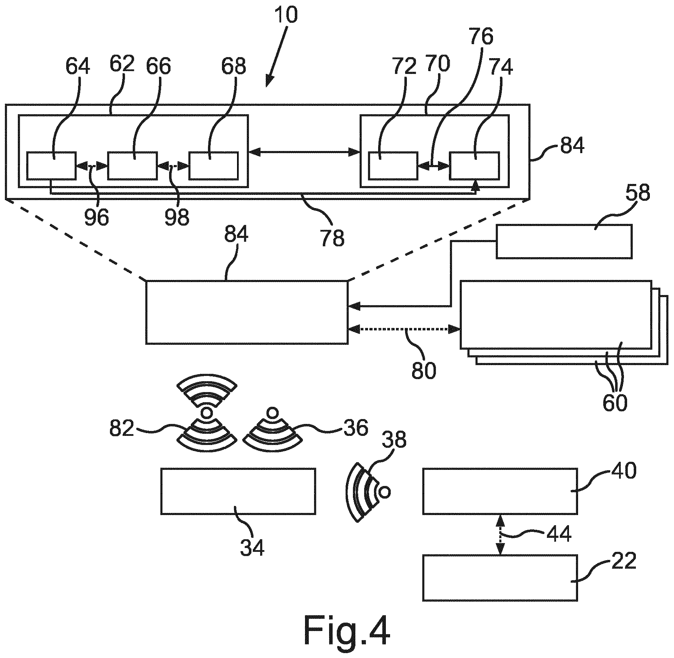

Fig. 4 zeigt eine schematische Bockdarstellung für eine weitere Ausgestaltung eines Beleuchtungssystems 10, wie es bereits anhand von den Figuren 2 und 3 erläutert worden ist, weshalb ergänzend auf die Ausführungen zu diesen Ausführungsbeispielen verwiesen wird.

Im Unterschied zu den vorherigen Ausführungsbeispielen, werden die Daten bei dem Ausführungsbeispiel gemäß Fig. 4 durch das Kommunikationsendgerät 34 bereitgestellt. Zu diesem Zweck ist der Beacon 70 der Beleuchtungseinrichtung 56 vorliegend für eine bidirektionale Kommunikation mittels einer drahtlosen Kommunikationsverbindung 82 ausgebildet. Der Beacon 70 ist hier also nicht nur eine Sendeeinrichtung sondern eine Sende-Empfangseinrichtung. Die weiteren Beacon der Beleuchtungseinrichtungen 60 können dagegen weiterhin reine Sendeeinrichtungen sein. Sie können grundsätzlich aber ebenfalls als Sende-Empfangs-Einrichtung ausgebildet sein.

Das Kommunikationsendgerät 34 dient in dieser Ausgestaltung als Datenquelle. Das Kommunikationsendgerät 34 wird in Kommunikationsverbindung mit einer Beleuchtungseinrichtung 84 gebracht, die hier anstelle der Beleuchtungseinrichtung 56 bei den vorhergehenden Ausführungsbeispielen vorgesehen ist. Die Beleuchtungseinrichtung 84 unterscheidet sich von der Beleuchtungseinrichtung 56 der vorhergehenden Ausführungsbeispiele im Wesentlichen dadurch, dass der Beacon 70 hier auch eine Empfangsfunktion bereitstellt.

Die Daten werden vom Kommunikationsendgerät 34 an die Beleuchtungseinrichtung 84 übermittelt, die entsprechend das Rechnerprogramm installiert beziehungsweise ändert. Die von der Beleuchtungseinrichtung 84 empfangenen Daten werden sodann über die Kommunikationsverbindung 80 wieder an die weiteren Beleuchtungseinrichtungen 60 übermittelt, sodass auch bei diesen Beleuchtungseinrichtungen 60 das Rechnerprogramm entsprechend installiert beziehungsweise geändert wird. Auch hier ist lediglich das Übermitteln der Daten an eine der Beleuchtungseinrichtungen, nämlich die Beleuchtungseinrichtung 84, erforderlich. Die weitere Funktionalität entspricht der, die bereits zu den vorhergehenden Ausführungsbeispielen erläutert wurde.

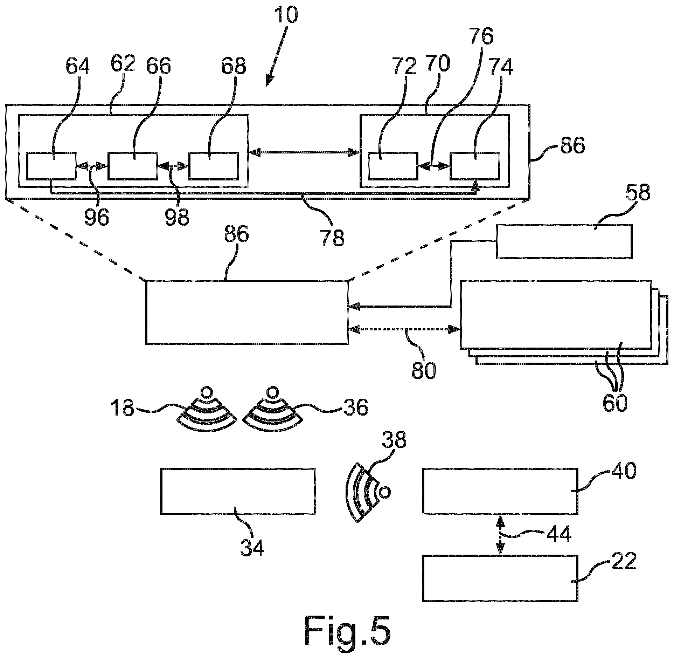

Fig. 5 zeigt eine schematische Blockdarstellung für eine weitere Ausgestaltung eines Beleuchtungssystems 10, die auf den vorgenannten Ausgestaltungen zu den Figuren 2 bis 4 basiert, weshalb ergänzend auf diese Ausführungen verwiesen wird. Im Unterschied zu den vorhergehenden Ausführungsbeispielen ist vorliegend vorgesehen, dass eine Beleuchtungseinrichtung 86 neu installiert wird, die eine aktuelle Version für ein Rechnerprogramm bereits enthält. Das Installieren der Beleuchtungseinrichtung 86 kann im Rahmen einer Neuinstallation oder auch einer Wartung beziehungsweise einem Austausch der Beleuchtungseinrichtung erfolgen. Die Beleuchtungseinrichtung 86 wurde deshalb bereits, bevor sie installiert wurde, mit den Daten versehen, die für das aktuelle Rechnerprogramm erforderlich sind. Entsprechend ist das Rechnerprogramm bereits installiert beziehungsweise geändert.

In dieser Ausgestaltung ist vorgesehen, dass die Beleuchtungseinrichtung 86 über die Kommunikationsverbindung 80 mit den weiteren der Beleuchtungseinrichtungen 60 in Kommunikationsverbindung tritt und die Daten gemäß dem aktuellen Rechnerprogramm an die Beleuchtungseinrichtungen 60 übermittelt. Diese installieren dann das neue Rechnerprogramm beziehungsweise ändern das vorhandene Rechnerprogramm. Auch hier ist das Zuführen der Daten lediglich bei einer der Beleuchtungseinrichtungen, hier der Beleuchtungseinrichtung 86, erforderlich. Die weitere Aktualisierung der Rechnerprogramme der weiteren Beleuchtungseinrichtungen 60 erfolgt dann automatisiert.

Die übrigen Funktionen hinsichtlich der Beacon-Funktionalität sowie auch der Leuchteinrichtungen entsprechen denen, die bereits zu den vorhergehenden Ausführungsbeispielen erläutert worden sind.

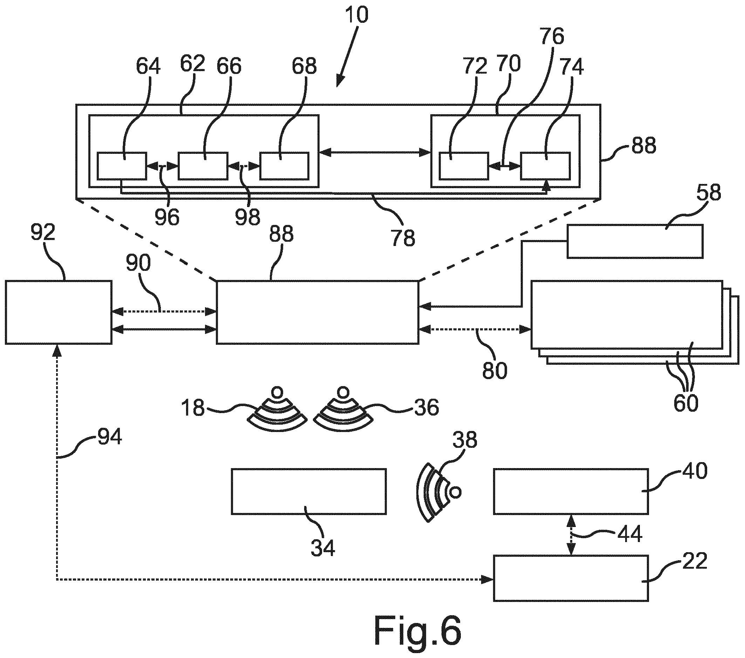

Fig. 6 zeigt eine schematische Blockdarstellung einer weiteren Ausgestaltung eines Beleuchtungssystems 10, welches ebenfalls auf den zuvor bereits erläuterten Ausführungsbeispielen basiert, weshalb ergänzend auf diese Ausführungen verwiesen wird. Im Unterschied zu den vorhergehenden Ausführungsbeispielen ist hier eine Beleuchtungseinrichtung 88 vorgesehen, die über eine Kommunikationsverbindung 90 an ein Zugangsgerät 92 angeschlossen ist. Das Zugangsgerät 92 dient hier als Zugangsgerät zu einem nicht weiter bezeichneten mobilen Datennetz. Über eine Mobilfunkverbindung 94 ist das Zugangsgerät 92 an die Infrastruktureinrichtung 22 angeschlossen. Die Infrastruktureinrichtung 22 umfasst vorliegend die Datenquelle, die die Daten für das zu installierende beziehungsweise zu ändernde Rechnerprogramm bereitstellt.

Die Beleuchtungseinrichtung 88 bezieht somit über das Zugangsgerät 92 von der Infrastruktureinrichtung 22 die Daten, die dem aktuellen Rechnerprogramm entsprechen. Nachdem die Daten in der Beleuchtungseinrichtung 88 vorhanden sind, wird das Rechnerprogramm installiert oder entsprechend geändert. Die Daten werden sodann über die Kommunikationsverbindung 80 - wie bereits bei den vorhergehenden Ausführungsbeispielen erläutert - an die weiteren Beleuchtungseinrichtungen 60 verteilt, die dann ebenfalls das Rechnerprogramm entsprechend installieren beziehungsweise aktualisieren. Auch hier ist das Zuführen der Daten lediglich bei einer einzigen der Beleuchtungseinrichtungen, hier nämlich der Beleuchtungseinrichtung 88, erforderlich.

Auch wenn in den Ausführungsbeispielen lediglich eine einzige der Beleuchtungseinrichtungen die Daten von extern zugeführt bekommt, kann natürlich vorgesehen sein, dass auch zwei oder mehrere der Beleuchtungseinrichtungen die Daten zugeführt bekommen und dann an weitere Beleuchtungseinrichtungen entsprechend verteilen.

Die Ausführungsbeispiele dienen lediglich der Erläuterung der Erfindung und sollen diese nicht beschränken.

### BEZUGSZEICHENLISTE

- 10: Beleuchtungssystem
- 12: Beleuchtungseinrichtung
- 14: Leuchteinrichtung
- 16: Beacon
- 18: Signal
- 20: Beleuchtungseinrichtung
- 22: Infrastruktureinrichtung
- 24: Kommunikationsverbindung
- 26: Kommunikationsverbindung
- 28: Steuereinheit
- 30: Rechnereinheit
- 32: Speichereinheit
- 34: Kommunikationsendgerät
- 36: Licht
- 38: Kommunikationsverbindung
- 40: Router
- 42: Kommunikationsverbindung
- 44: Kommunikationsverbindung
- 46: Content-Management-System
- 48: Kommunikationsverbindung
- 50: Gateway
- 52: Kommunikationsverbindung
- 54: Lichtmanagementsystem
- 56: Beleuchtungseinrichtung
- 58: Netzversorgung
- 60: Beleuchtungseinrichtung
- 62: Leuchteinrichtung
- 64: elektronisches Vorschaltgerät
- 66: Energieschnittstelle
- 68: Leuchtdiodenanordnung
- 70: Beacon
- 72: Steuereinheit
- 74: Energieschnittstelle
- 76: Energieübertragungskanal
- 78: Energieübertragungskanal
- 80: Kommunikationsverbindung
- 82: Kommunikationsverbindung
- 84: Beleuchtungseinrichtung
- 86: Beleuchtungseinrichtung
- 88: Beleuchtungseinrichtung
- 90: Kommunikationsverbindung
- 92: Zugangsgerät
- 94: Mobilfunkverbindung
- 96: Energieübertragungskanal
- 98: Energieübertragungskanal

## Patentansprüche

1. Verfahren zum Installieren oder Ändern eines ablauffähigen Rechnerprogramms in einem Beleuchtungssystem (10) mit einer Mehrzahl von Beleuchtungseinrichtungen (56, 60), die eine Leuchteinrichtung (62), eine in oder unmittelbar an der Leuchteinrichtung (62) angeordnete Sendeeinrichtung (70) und eine jeweilige Rechnereinheit (30) aufweisen, wobei das ablauffähige Rechnerprogramm in einer Speichereinheit der Sendeeinrichtung (70) gespeichert ist, welches für die Rechnereinheit (30) bereitsteht, sodass mittels der Rechnereinheit (30) eine vorgegebene Steuerfunktion erreicht wird, wobei die Sendeeinrichtung (70) ein Signal (18) mit einer für die Sendeeinrichtung (70) spezifischen Identifikationsinformation drahtlos aussendet, bei dem:
- dem zu installierenden oder zu ändernden Rechnerprogramm entsprechende Daten von einer Datenquelle (46) bereitgestellt werden,
- die Daten an die Beleuchtungseinrichtungen (56, 60) übermittelt werden und
**dadurch gekennzeichnet, dass**
- basierend auf den übermittelten Daten das Rechnerprogramm bei den jeweiligen Rechnereinheiten (30) der Beleuchtungseinrichtungen (56, 60) automatisiert installiert oder ein bereits installiertes Rechnerprogramm automatisiert geändert wird,
- zwischen den Beleuchtungseinrichtungen (56, 60) eine Kommunikationsverbindung (80) besteht,
- eine erste der Beleuchtungseinrichtungen (56) die Daten von der Datenquelle (46) erhält und
- zum Installieren oder Ändern des Rechnerprogramms bei wenigstens einer zweiten der Beleuchtungseinrichtungen (60) die erste der Beleuchtungseinrichtungen (56) die Daten über die Kommunikationsverbindung (80) an die wenigstens eine zweite der Beleuchtungseinrichtungen (60) übermittelt.

2. Verfahren nach Anspruch 1,
**dadurch gekennzeichnet, dass**
bei der zweiten der Beleuchtungseinrichtungen (60) geprüft wird, ob die Daten zum Installieren oder Ändern des Rechnerprogramms der zweiten der Beleuchtungseinrichtungen (60) vorgesehen sind.

3. Verfahren nach einem der vorhergehenden Ansprüche,
**dadurch gekennzeichnet, dass**
die zweite der Beleuchtungseinrichtungen (60) die Daten über die Kommunikationsverbindung (80) an wenigstens eine weitere der Beleuchtungseinrichtungen (60) übermittelt.

4. Verfahren nach einem der vorhergehenden Ansprüche,
**dadurch gekennzeichnet, dass**
die Kommunikationsverbindung 80) nach Übermitteln der Daten beendet wird.

5. Verfahren nach einem der vorhergehenden Ansprüche,
**dadurch gekennzeichnet, dass**
die Daten wenigstens bei der ersten der Beleuchtungseinrichtungen (56) in einer Speichereinheit (32) der Beleuchtungseinrichtung (56) gespeichert werden.

6. Verfahren nach einem der vorhergehenden Ansprüche,
**dadurch gekennzeichnet, dass**
die Daten von der ersten Beleuchtungseinrichtung (56) erst nach dem Installieren oder dem Ändern des Rechnerprogramms der ersten Beleuchtungseinrichtung (56) von dieser an die wenigstens eine zweite der Beleuchtungseinrichtungen (60) übermittelt werden.

7. Verfahren nach einem der vorhergehenden Ansprüche,
**dadurch gekennzeichnet, dass**
das Installieren oder das Ändern des Rechnerprogramms zu einem vorgegebenen Zeitpunkt erfolgt.

8. Verfahren nach Anspruch 7,
**dadurch gekennzeichnet, dass**
der Zeitpunkt zumindest von einem Betriebszustand der jeweiligen Beleuchtungseinrichtung (56, 60) abhängt.

9. Verfahren nach Anspruch 7 oder 8,
**dadurch gekennzeichnet, dass**
der Zeitpunkt zum Installieren oder Ändern des Rechnerprogramms von einer in den Daten enthaltenen Installations- oder Änderungsinformation abhängt.

10. Verfahren nach einem der Ansprüche 7 bis 9,
**dadurch gekennzeichnet, dass**
der Zeitpunkt von einer Verfügbarkeit von elektrischer Energie für einen bestimmungsgemäßen Betrieb der jeweiligen Beleuchtungseinrichtung (56, 60) abhängt.

11. Verfahren nach einem der vorhergehenden Ansprüche,
**dadurch gekennzeichnet, dass**
die erste der Beleuchtungseinrichtungen (56) eine neue zweite Beleuchtungseinrichtung (60) erkennt und die Daten an die neue zweite der Beleuchtungseinrichtungen (60) automatisiert übermittelt.

12. Verfahren nach einem der vorhergehenden Ansprüche,
**dadurch gekennzeichnet, dass**
die Daten nur an zweite Beleuchtungseinrichtungen (60) in einem vorgegebenen räumlichen Bereich und/oder mit einem vorgegebenen räumlichen Abstand zur ersten Beleuchtungseinrichtung (56) übermittelt werden.

13. Verfahren nach einem der vorhergehenden Ansprüche,
**dadurch gekennzeichnet, dass**
das während des Installierens oder des Änderns des Rechnerprogramms wenigstens eine vorgebbare aktive Funktionalität der Beleuchtungseinrichtung (56, 60) deaktiviert und/oder eine vorgebbare deaktivierte Funktionalität aktiviert wird.

14. Verfahren nach einem der vorhergehenden Ansprüche,
**dadurch gekennzeichnet, dass**
durch das Installieren oder das Ändern des Rechnerprogramms eine in einer jeweiligen der Beleuchtungseinrichtungen (56, 60) verfügbare Funktionalität aktiviert oder deaktiviert wird.

15. Verfahren nach einem der vorhergehenden Ansprüche,
**dadurch gekennzeichnet, dass**
die Daten über ein Kommunikationsendgerät (34) bereitgestellt werden.

16. Verfahren nach einem der vorhergehenden Ansprüche,
**dadurch gekennzeichnet, dass**
die Datenquelle (46) zumindest teilweise vom Kommunikationsendgerät (34) bereitgestellt wird.

17. Verfahren nach einem der vorhergehenden Ansprüche,
**dadurch gekennzeichnet, dass**
die jeweilige Leuchteinrichtung (62) und die jeweils zugeordnete der Sendeeinrichtungen (70) über einen BUS, insbesondere einen Intra Luminaire Bus,
in Kommunikationsverbindung stehen.

18. Beleuchtungssystem (10) mit einer Mehrzahl von Beleuchtungseinrichtungen (56, 60), die eine Leuchteinrichtung (62), eine in oder unmittelbar an der Leuchteinrichtung (62) angeordnete Sendeeinrichtung (70) und eine jeweilige Rechnereinheit (30) aufweisen, wobei die Sendeeinrichtung (70) ausgebildet ist, ein Signal (18) mit einer für die Sendeeinrichtung (18) spezifischen Identifikationsinformation drahtlos auszusenden, wobei das Beleuchtungssystem (10) einen Datenquellenanschluss zum Anschließen an eine einem zu installierenden oder zu ändernden Rechnerprogramm entsprechende Daten bereitstellende Datenquelle (46) aufweist, wobei das Rechnerprogramm in einer Speichereinheit der Sendeeinrichtung (70) gespeichert ist, welches für die Rechnereinheit (30) bereitsteht, um mittels der Rechnereinheit (30) eine vorgebbare Steuerfunktion zu erreichen,
**dadurch gekennzeichnet, dass**
- die Beleuchtungseinrichtungen (56, 60) ausgebildet sind, basierend auf den übermittelten Daten das Rechnerprogramm bei den jeweiligen Rechnereinheiten (30) der Beleuchtungseinrichtungen (56, 60) automatisiert zu installieren oder ein bereits installiertes Rechnerprogramm automatisiert zu ändern,
- zwischen den Beleuchtungseinrichtungen (56, 60) eine Kommunikationsverbindung (80) besteht,
- wenigstens eine erste der Beleuchtungseinrichtungen (56) ausgebildet ist, die Daten von der Datenquelle (46) zu erhalten und
- zum Installieren oder Ändern des Rechnerprogramms bei wenigstens einer zweiten der Beleuchtungseinrichtungen (60) die erste der Beleuchtungseinrichtungen (56) ausgebildet ist, die Daten über die Kommunikationsverbindung (80) an die wenigstens eine zweite der Beleuchtungseinrichtungen (60) zu übermitteln.

## Claims

1. Method for installing or modifying an executable computer program in a lighting system (10) having a plurality of lighting devices (56, 60) which have a lighting device (62), a transmitting device (70) arranged in or directly on the lighting device (62) and a respective computer unit (30), wherein the executable computer program is stored in a memory unit of the transmitting device (70), which is available for the computer unit (30), so that a predetermined control function is achieved by means of the computer unit (30), wherein the transmitting device (70) wirelessly transmits a signal (18) with identification information specific to the transmitting device (70), at which:
- corresponding data is provided from a data source (46) to the computer program to be installed or modified,
- transmitting the data to the lighting means (56, 60), and **characterized in that**
- based on the transmitted data, the computer program is installed in the respective computer units (30) of the lighting devices (56, 60), or an already installed computer program is automatically changed,
- a communication link (80) is established between the lighting devices (56, 60),
- a first of the lighting devices (56) receives the data from the data source (46), and
- for installing or changing the computer program in at least a second of the lighting devices (60), the first of the lighting devices (56) transmits the data to the at least second of the lighting devices (60) via the communication link (80).

2. Method according to claim 1, **characterized in that**
at the second of the lighting devices (60) it is checked whether the data are intended for installing or changing the computer program of the second of the lighting devices (60).

3. Method according to one of the preceding claims, **characterized in that** the second of the lighting devices (60) transmits the data to at least one further of the lighting devices (60) via the communication link (80).

4. Method according to any one of the preceding claims, **characterized in that**
the communication link (80) is terminated after the data has been transmitted.

5. Method according to one of the preceding claims, **characterized in that**
the data is stored in a memory unit (32) of the illumination device (56) at least at the first of the lighting devices (56).

6. Method according to one of the preceding claims, **characterized in that**
the data are transmitted from the first lighting device (56) to the at least one second of the lighting devices (60) only after the computer program of the first lighting device (56) has been installed or changed.

7. Method according to one of the preceding claims, **characterized in that**
the installing or modifying of the computer program takes place at a predetermined time.

8. Method according to claim 7, **characterized in that**
the point in time depends at least on an operating state of the respective lighting device (56, 60).

9. Method according to claim 7 or 8, **characterized in that**
the point in time for installing or changing the computer program depends on an installation or change information contained in the data.

10. Method according to any one of claims 7 to 9, **characterized in that**
the point in time depends on an availability of electrical energy for an intended operation of the respective lighting device (56, 60).

11. Method according to any one of the preceding claims, **characterized in that**
the first of the lighting devices (56) detects a new second of the lighting devices (60) and automatically transmits the data to the new second of the lighting devices (60).

12. Method according to any one of the preceding claims, **characterized in that**
the data is transmitted only to second illumination devices (60) in a predetermined spatial area and/or at a predetermined spatial distance from the first illumination device (56).

13. Method according to one of the preceding claims, **characterized in that**
during the installation or the modification of the computer program at least one pretend active functionality of the lighting device (56, 60) is deactivated and/or a pretend deactivated functionality is activated.

14. Method according to any one of the preceding claims, **characterized in that**
a functionality available in a respective one of the lighting devices (56, 60) is activated or deactivated by installing or modifying the computer program.

15. Method according to any one of the preceding claims, **characterized in that**
the data is provided via a communication terminal (34).

16. Method according to any one of the preceding claims, **characterized in that**
the data source (46) is provided at least in part by the communication terminal (34).

17. Method according to any one of the preceding claims, **characterized in that**
the respective lighting device (62) and the respectively associated one of the transmitting devices (70) are in communication connection via a BUS, in particular an Intra Luminaire Bus,
are in communication connection.

18. Lighting system (10) having a plurality of lighting devices (56, 60), which have a lighting device (62), a transmitting device (70) arranged in or directly on the lighting device (62), and
a respective computer unit (30), the transmitting means (70) being adapted to wirelessly transmit a signal (18) having identification information specific to the transmitting means (18), wherein the lighting system (10) includes a data source connector for
a data source (46) providing data corresponding to a computer program to be installed or changed, wherein the computer program is stored in a memory unit of the transmitting device (70), which is available for the computer unit (30) in order
to achieve a predefinable control function with the computer unit (30),
**characterized in that**
- the illumination devices (56, 60) are designed, based on the transmitted data, to automatically install the computer program at the respective computer units (30) of the illumination devices (56, 60) or to automatically change an already installed computer program,
- there is a communication link (80) between the lighting devices (56, 60), and
communication link (80) exists between the lighting devices (56, 60),
- at least a first one of the lighting devices (56) is designed to receive the data from the data source (46), and
- for installing or changing the computer program in at least a second of the lighting devices (60), the first of the lighting devices (56) is designed to transmit the data via the communication link (80) to the at least a second of the lighting devices (60).

## Revendications

1. Procédé pour installer ou modifier un programme informatique exécutable dans un système d'éclairage (10) avec une pluralité de dispositifs d'éclairage (56, 60), qui ont un dispositif d'éclairage (62), un dispositif de transmission (70) agencé dans ou directement sur le dispositif d'éclairage (62) et une unité informatique respective (30), le programme informatique exécutable étant stocké dans une unité de mémoire du dispositif émetteur (70), qui est disponible pour l'unité informatique (30), de sorte qu'une fonction de commande prédéterminée est obtenue au moyen de l'unité informatique (30), le dispositif émetteur (70) émettant un signal (18) émet sans fil avec des informations d'identification propres au dispositif émetteur (70), dans lequel :
- des données correspondant au programme d'ordinateur à installer ou à modifier sont fournies par une source de données (46),
- les données sont transmises aux dispositifs d'éclairage (56, 60) et **caractérisé en ce que**
- sur la base des données transmises, le programme informatique est automatiquement installé dans les unités informatiques respectives (30) des dispositifs d'éclairage (56, 60) ou un programme informatique déjà installé est automatiquement modifié,
- il existe une liaison de communication (80) entre les dispositifs d'éclairage (56, 60),
- un premier des dispositifs d'éclairage (56) reçoit les données de la source de données (46) et
- pour installer ou modifier le programme informatique dans au moins un second des dispositifs d'éclairage (60), le premier des dispositifs d'éclairage (56) transmet les données via la liaison de communication (80) au moins un second des dispositifs d'éclairage (60).

2. Procédé selon la revendication 1, **caractérisé en ce que**
au niveau du deuxième des dispositifs d'éclairage (60), il est vérifié si les données pour installer ou modifier le programme informatique du deuxième des dispositifs d'éclairage (60) sont fournies.

3. Procédé selon l'une quelconque des revendications précédentes,
**caractérisé en ce que**
le deuxième des dispositifs d'éclairage (60) transmet les données via la liaison de communication (80) à au moins un autre des dispositifs d'éclairage (60).

4. Procédé selon l'une quelconque des revendications précédentes,
**caractérisé en ce que**
la connexion de communication (80) est terminée après que les données ont été transmises.

5. Procédé selon l'une quelconque des revendications précédentes,
**caractérisé en ce que**
les données sont stockées au moins pour le premier des dispositifs d'éclairage (56) dans une unité de mémoire (32) du dispositif d'éclairage (56) .

6. Procédé selon l'une quelconque des revendications précédentes,
**caractérisé en ce que**
les données ne sont transmises par le premier dispositif d'éclairage (56) à l'au moins un deuxième des dispositifs d'éclairage (60) qu'après l'installation ou la modification du programme informatique du premier dispositif d'éclairage (56).

7. Procédé selon l'une quelconque des revendications précédentes,
**caractérisé en ce que**
l'installation ou la modification du programme d'ordinateur est effectuée à un moment prédéterminé.

8. Procédé selon la revendication 7, **caractérisé en ce que**
le moment dépend au moins d'un état de fonctionnement du dispositif d'éclairage respectif (56, 60).

9. Procédé selon la revendication 7 ou 8, **caractérisé en ce que**
le moment d'installer ou de modifier le programme d'ordinateur dépend d'une information d'installation ou de modification contenue dans les données.

10. Procédé selon l'une quelconque des revendications 7 à 9, **caractérisé en ce que**
le moment dépend d'une disponibilité d'énergie électrique pour un fonctionnement conforme à l'usage prévu du dispositif d'éclairage respectif (56, 60).

11. Procédé selon l'une des revendications précédentes, **caractérisé en ce que**
le premier des dispositifs d'éclairage (56) détecte un nouveau deuxième dispositif d'éclairage (60) et transmet les données au nouveau deuxième des dispositifs d'éclairage (60) de manière automatisée.

12. Procédé selon l'une quelconque des revendications précédentes,
**caractérisé en ce que**
les données ne sont transmises qu'à des deuxièmes dispositifs d'éclairage (60) situés dans une zone spatiale prédéterminée et/ou à une distance spatiale prédéterminée du premier dispositif d'éclairage (56).

13. Procédé selon l'une quelconque des revendications précédentes,
**caractérisé en ce que**
pendant l'installation ou la modification du programme d'ordinateur, au moins une fonctionnalité active pré définissable du dispositif d'éclairage (56, 60) est désactivée et/ou une fonctionnalité désactivée pré définissable est activée.

14. Procédé selon l'une quelconque des revendications précédentes,
**caractérisé en ce que**
l'installation ou la modification du programme informatique active ou désactive une fonctionnalité disponible dans l'un respectif des dispositifs d'éclairage (56, 60).

15. Procédé selon l'une quelconque des revendications précédentes,
**caractérisé en ce que**
les données sont fournies par l'intermédiaire d'un terminal de communication (34).

16. Procédé selon l'une quelconque des revendications précédentes,
**caractérisé en ce que**
la source de données (46) est fournie au moins en partie par le terminal de communication (34).

17. Procédé selon l'une des revendications précédentes,
**caractérisé en ce que**
le dispositif lumineux (62) respectif et le dispositif émetteur (70) respectivement associé sont reliés par un BUS, en particulier un Intra Luminaire Bus, sont en liaison de communication.

18. Système d'éclairage (10) avec une pluralité de dispositifs
d'éclairage (56, 60), qui ont un dispositif d'éclairage (62), un dispositif de transmission (70) agencé dans ou directement sur le dispositif d'éclairage (62) et
disposent chacun d'une unité informatique (30), le dispositif de transmission (70) étant agencé pour transmettre sans fil un signal (18) avec des informations d'identification propres au dispositif de transmission (18), le système d'éclairage (10) comportant une connexion de source de données pour connecter à une source à installer ou source de données (46) fournissant des données correspondant au programme informatique à modifier, le programme informatique étant stocké dans une unité de mémoire du dispositif émetteur (70), qui est disponible pour l'unité informatique (30) pour
l'unité de calcul (30) pour réaliser une fonction de commande spécifiable,
**caractérisé en ce que**
- les dispositifs d'éclairage (56, 60) sont conçus pour installer automatiquement le programme informatique dans les unités informatiques respectives (30) des dispositifs d'éclairage (56, 60) sur la base des données transmises ou pour modifier automatiquement un programme informatique qui a déjà été installée,
- il existe une liaison de communication (80) entre les dispositifs d'éclairage (56, 60),
- au moins un premier des dispositifs d'éclairage (56) est agencé pour recevoir les données de la source de données (46) et
- pour installer ou modifier le programme informatique dans au moins un second des dispositifs d'éclairage (60), le premier des dispositifs d'éclairage (56) est adapté pour transmettre les données via la liaison de communication (80) à l'au moins un second des les dispositifs d'éclairage (60).
